# EUROPÄISCHE PATENTSCHRIFT

(11) **EP 2 724 825 B1**
(45) Veröffentlichungstag und Bekanntmachung des Hinweises auf die Patenterteilung: **14.04.2021**
(21) Anmeldenummer: 13190181.1
(22) Anmeldetag: 25.10.2013
(51) Int. Cl.: B25J 9/00, B25J 13/08

(54) **Arbeitstisch, aufweisend eine Vorrichtung zum Durchführen eines Bewegungsablaufs**
Working table comprising a device for carrying out a sequence of movements
Table de travail comprenant un dispositif d'exécution d'une séquence de mouvement

(30) Priorität: 25.10.2012 DE 102012110211
(43) Veröffentlichungstag der Anmeldung: 30.04.2014
(73) Patentinhaber: Helmut-Schmidt-Universität, Universität der Bundeswehr Hamburg, 22043 Hamburg (DE); Hamburg Innovation GmbH, 21079 Hamburg (DE)
(72) Erfinder: Wulfsberg, Jens Peter, 23843 Neritz (DE); Weidner, Robert, 29581 Bohlsen (DE)
(74) Vertreter: RGTH

(56) Entgegenhaltungen:
- EP-A1- 2 198 810
- KAZEROONI H: "Exoskeletons for Human Power Augmentation", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, 2. August 2005 (2005-08-02), Seiten 3120-3125, XP010857547, DOI: 10.1109/IROS.2005.1545451 ISBN: 978-0-7803-8912-0
- HEEDON LEE ET AL: "Development of human-robot interfacing method for assistive wearable robot of the human upper extremities", SICE ANNUAL CONFERENCE, 2008, IEEE, PISCATAWAY, NJ, USA, 20. August 2008 (2008-08-20), Seiten 1755-1760, XP031351418, DOI: 10.1109/SICE.2008.4654948 ISBN: 978-4-907764-30-2
- KAZEROONI H ET AL: "On the Control and Stability of Robots Worn by Human: Theory", AMERICAN CONTROL CONFERENCE, 1989, IEEE, PISCATAWAY, NJ, USA, 21. Juni 1989 (1989-06-21), Seiten 1918-1924, XP031429167,

## Beschreibung

Die Erfindung betrifft einen Arbeitstisch mit einer Vorrichtung zum Durchführen eines Bewegungsablaufs.

### Stand der Technik

Die EP 1 364 755 B1 sowie die US 2003/0223844 A1 beschreiben ein Exoskelett für einen Arm, insbesondere zur Verwendung in der Raumfahrt, das dazu bestimmt ist, für Bewegungen der Armgelenke eines menschlichen Körpers repräsentative Daten mit Hilfe von Messwertgebern zu erfassen und/oder Kraftmomente mit Hilfe von zumindest einem Teil der Gelenke zugeordneten Aktivierungseinheiten aufzubringen. Dabei weist das Exoskelett eine erste Vorrichtung in Gestalt eines Ärmels auf, der dazu bestimmt ist, auf zumindest einen der Arme des menschlichen Körpers aufgeschoben zu werden, so dass eine kinematische Gelenkkette entsteht, die parallel zu den Armgelenken des menschlichen Körpers angeordnet ist. Die erste Vorrichtung weist eine Schulterexoskelett genannte erste Baugruppe mit einer bestimmten ersten Anzahl von den Schultergelenken des menschlichen Körpers zugeordneten Gelenken, eine Ellbogenexoskelett genannte zweite Baugruppe mit einer bestimmten zweiten Anzahl von den Ellbogengelenken des menschlichen Körpers zugeordneten Gelenken und eine Handgelenkexoskelett genannte dritte Baugruppe mit einer bestimmten dritten Anzahl von dem Handgelenk des menschlichen Körpers zugeordneten Gelenken auf, wobei die Summe der bestimmten ersten, zweiten und dritten Anzahl von Gelenken gleich sechzehn ist, so dass sechzehn Freiheitsgrade möglich sind. Die Aktivierungseinheiten werden über flexible Bänder gesteuert, die entlang der Baugruppen verlaufen. Die erste bis dritte Baugruppe sind mechanisch voneinander getrennt, so dass sie einzeln über die flexiblen Bänder gesteuert werden können. Ferner weist das Exoskelett eine zweite Vorrichtung auf, die einen vom Brustkorb des menschlichen Körpers getragenen Stützträger bildet, welcher eine starre vordere Platte, die sogenannte Brustplatte, und eine starre hintere Platte, die sogenannte Rückenplatte, aufweist. Das Schulterexoskelett ist mit seinem proximalen Ende an der vorderen Platte befestigt, wobei diese eine feste Referenz für jegliche Bewegung des Exoskeletts bietet.

Ein Exoskelett für einen Arm eines menschlichen Körpers nach der vorstehenden Beschreibung wird angewendet zur Fernsteuerung eines humanoiden Roboters, der außerhalb einer Raumstation arbeitet, mit künstlichen Armen versehen ist und Aufgaben unter dem Kommando eines menschlichen Körpers ausführt. Das Armexoskelett ist zumindest auf einen Arm des menschlichen Körpers aufgeschoben. Der Roboter empfängt Daten, welche die Ausführung von Bewegungen im eineindeutigen Verhältnis zu Bewegungen des Arms des menschlichen Körpers bewirken, und überträgt sogenannte Rückkopplungsdaten, welche die Ausführung von Bewegungen sämtlicher Gelenke bzw. eines Teils der Gelenke des Armexoskeletts bewirken und entsprechende Bewegungen des Arms des menschlichen Körpers hervorrufen.

Das beschriebene Exoskelett dient somit einerseits zum Erfassen von Bewegungsdaten eines Arms eines menschlichen Körpers, die auf einen humanoiden Roboter zu dessen Steuerung übertragen werden. Vom Roboter werden andererseits Rückkopplungsdaten auf das Exoskelett zurückübertragen und bewirken Bewegungen des Exoskeletts, die dem Arm des menschlichen Körpers eine Empfindung von Rückmeldungskräften, d.h. derjenigen Kräfte vermitteln sollen, die auf den humanoiden Roboter wirken, wodurch dem den humanoiden Roboter bedienenden menschlichen Körper ein sensorischer Eindruck von den mit dem humanoiden Roboter durchgeführten Handhabungen mitgeteilt werden soll, so als würden diese Handhabungen vom Arm des menschlichen Körpers unmittelbar ausgeführt und er die damit verbundenen Rückmeldungskräfte unmittelbar spüren.

Aus der WO 2011/127421 A1 ist ein Exoskelett bekannt, welches konfigurierbar ist, um mit einer Person gekoppelt zu werden. Das Exoskelett umfasst einen Exoskelett-Rumpf, der mit ersten und zweiten Beinstützen an jeweiligen Hüftgelenken verbunden ist, die eine Beugung und Ausdehnung um jeweilige Hüftachsen ermöglichen. Eine Gegengewichtanordnung umfasst eine Hilfsmasse, die durch einen Aktuator mit dem Exoskelett-Rumpf derart verbunden ist, dass sie sich in einer Position hinter dem Exoskelett-Rumpf erstreckt. Eine als vordere Last bezeichnete Nutzlast wird vom Exoskelett mittels einer Lasttragevorrichtung unterstützt, die eine Lastbewegungseinrichtung zum selektiven Betreiben motorbetriebener Haspelmechanismen einschließt, welche zum Anheben oder Absenken der vorderen Last relativ zum Exoskelett-Rumpf dienen. Die Hilfsmasse kann wahlweise in ihrer Lage relativ zum Exoskelett-Rumpf verstellt werden, um das durch die Hilfsmasse um die Hüftachsen hervorgerufene Moment gegenüber dem Moment auszubalancieren, das durch eine von der vorderen Last hervorgerufene, abwärts gerichtete Kraft auf die Lasttragevorrichtung wirkt.

Die Haspelmechanismen bei diesem Exoskelett sind über Gurte, Seile oder dergleichen mit sogenannten End-Effektoren verbunden, über die die Nutzlast an den Gurten, Seilen oder dergleichen befestigt wird. Dabei sind die End-Effektoren mit Sensoren ausgestattet, die als in Handhabungselementen angeordnete Mensch-Maschine-Wechselwirkungssensoren ausgestaltet sein können zum Messen einer von der Person über die Handhabungselemente und die End-Effektoren auf die Nutzlast ausgeübten Kraft. Eine Steuerung ist vorgesehen, die zum Steuern der motorbetriebenen Haspelmechanismen auf Grundlage der von den Mensch-Maschine-Wechselwirkungssensoren erfassten Messdaten über die von der Person auf die Nutzlast ausgeübten Kraft in der Weise vorgesehen sein kann, dass die von der Person auf die Nutzlast ausgeübte Kraft wirksam verstärkt wird. Im einfachsten Fall ist die Steuerung so ausgebildet, dass die von den motorbetriebenen Haspelmechanismen aufgebrachte Kraft proportional zu der von der Person auf die Nutzlast ausgeübten Kraft ist; allerdings sind auch andere Beziehungen zwischen diesen Kräften möglich.

Die Wirkungsweise dieses Exoskeletts ist somit auf das gesteuerte Anheben von Lasten ausgerichtet. Damit soll einer Person, mit der das Exoskelett gekoppelt ist, das Hantieren schwerer Gegenstände erleichtert werden, da ein wählbarer Anteil der Lasten vom Exoskelett aufgefangen werden.

Aus der US 5 282 460 A ist ein Kraftunterstützungsapparat zum Befestigen an einem Träger, d.h. einem Menschen oder dergleichen, bekannt, der zum Unterstützen der Muskelkraft zum Bewegen von Gelenken des Skeletts dient. Insbesondere soll dabei die Krafteinwirkung des Apparates in Übereinstimmung mit den Drehachsen der Gelenke des Trägers gebracht werden. Dabei wird es als allgemeine Aufgabe derartiger Apparate bezeichnet, das Aufbringen von Kräften durch die Muskelkraft des Trägers zu messen und den Kraftunterstützungsapparat derart zu betreiben, dass die von ihm aufgewandten Kräfte in dieselbe Richtung wirken, d.h. dass die vom Träger aufgewandten Kräfte vervielfältigt werden. Alternativ kann der Apparat eine gesteuerte Bewegung der Gelenke eines Trägers vornehmen, dessen Muskeln oder Nerven für ein Aufbringen einer Kraft in einer gewünschten Richtung funktionslos sind.

Demgemäß wird es als eine Aufgabe der in der US 5 282 460 A beschriebenen Einrichtung bezeichnet, einen im wesentlichen vollständig kraftunterstützenden Exoskelett-Apparat zu schaffen, der es einem Nutzer bzw. Träger ermöglicht, die meisten der Aktivitäten bzw. Bewegungen des biologischen Muskel- und Skelettapparates mit erhöhter Kraft auszuführen.

Diese Aufgabe wird gemäß der US 5 282 460 A gelöst durch ein Exoskelett-Roboter-Gerät, das relative Bewegungen zwischen Teilen des biologischen Skeletts, die durch biologische Gelenke miteinander verbunden sind, ergänzt und bevorzugt vollständige Abschnitte eines von einem Menschen äußerlich getragenen (Exo-) Skeletts bildet. Dieses Exoskelett enthält Gelenke und Aktuatoren zum Bewegen dieser Gelenke. Die Aktuatoren können zumindest teilweise durch einen Mikroprozessor gesteuert werden, der gespeicherte (Bewegungs-) Folgen ausführen kann. Wahlweise oder zusätzlich können die Aktuatoren eine Kraft in derselben Richtung aufbringen, wie sie durch den Träger gegen Drucksensoren aufgewendet wird. Diese Drucksensoren sind mit Ventilen gekoppelt und steuern diese, wobei die Ventile auch durch den Mikroprozessor betreibbar sein können. Der Mikroprozessor ermöglicht eine Abwandlung nutzergesteuerter Bewegungen wie eine Simulation von Schwerkraftwirkungen. Diese Simulation wird als bevorzugt zum Trainieren eines Trägers im Umgang mit dem Exoskelett anwendbar beschrieben. Sie soll in einer Trainingsphase dem Träger die Wirkung der Schwerkraft nachstellen, der er bei entsprechendem Betrieb des Exoskeletts durch dessen kraftverstärkende Wirkung nur noch teilweise ausgesetzt ist.

Wie auch an anderer Stelle der US 5 282 460 A erläutert wird, dient das beschriebene Exoskelett bevorzugt einer Unterstützung solcher Bewegungen wie Gehen, Erheben aus einem Stuhl, Treppensteigen, usw. Zu diesem Zweck kann das Exoskelett Sensoren enthalten, die auf charakteristischen Druck der Gliedmaßen des Trägers ansprechen. Diese Sensoren sind mit Ventilen verbunden, die zwischen einer Energiequelle und den Aktuatoren angeordnet sind und zum Aufbringen einer mechanischen Leistung dienen, durch die die betreffenden Gliedmaßen um Gelenke in derselben Richtung gedreht werden, in die der Träger seine Gliedmaßen bewegt. Wahlweise oder zusätzlich kann die Steuerung, d.h. der Mikroprozessor, zum Auslesen vorprogrammierter (Daten-) Sequenzen eingerichtet sein, durch die allgemeine Bewegungsabfolgen bewirkt werden. Diese letztere Alternative ermöglicht ein Betreiben des Exoskeletts auch durch einen Träger, dem die motorischen oder nervlichen Funktionen in den betreffenden Gliedmaßen vollständig fehlen. In diesem Fall kann das Exoskelett gemäß der US 5 282 460 A auch ohne Steuerung durch die genannten Sensoren betrieben werden.

In der US 3 358 678 A ist ein unabhängiges, batteriebetriebenes bzw. kraftgetriebenes Personal-Unterstützungssystem beschrieben, das einen verstärkten oder ergänzenden motorischen Antrieb der Gliedmaßen eines Trägers vorsieht, um seine Fortbewegung zu unterstützen. Das System umfasst einen äußeren Anzug, der ein gelenkiges Rahmentragwerk umschließt, das alle Körperteile des Trägers stützt. Durch kraftgetriebene Aktuatoren wird eine gelenkige Bewegung des Rahmentragwerks erreicht, gesteuert durch programmierte Speicherschaltkreise über eine Steuerschaltung, die durch örtliche oder Fernsteuerung geregelt wird, vermehrt um Gleichgewichts- und Näherungs-Messsysteme, die das Gleichgewicht des Trägers, seine Sicherheit und effektive Bewegung unabhängig von seiner körperlichen Verfassung gewährleisten sollen. Das System ist vorzugsweise vorgesehen für Personen, die sich in gefährlicher Umgebung bewegen, wie z.B. für Feuerwehrleute, und soll insbesondere einer (durch Verletzungen) behinderten oder bewusstlosen Person die Flucht aus der gefährlichen Umgebung ermöglichen, indem es diese Person in die Lage versetzt, in einer im wesentlichen normalen Weise über jede Art von Terrain zu gehen. Dazu sind automatische, programmierte Steuersysteme vorgesehen, die die vorgenannten Funktionen bzw. die einzelnen Baugruppen des Systems betreiben. Unter Einbeziehung einer Gleichgewichtsregelung und einer Auswertung von Näherungs- und Terrainsensoren zur Erfassung von Hindernissen oder Vertiefungen wird der Träger durch programmierte Bewegungen des Rumpfes und der Gliedmaßen fortbewegt. Ein Kommando zum Ausführen dieser Bewegungen kann vom Träger selbst oder durch Fernsteuerung gegeben werden.

Aus der US 2012/0172770 A1 ist ein Steuerungssystem für eine Gehhilfe bekannt, die geeignet ist zum Unterstützen einer gehbehinderten Person. Es wird als Aufgabe bezeichnet, eine stabile Gehhilfe zu schaffen, die in der Lage ist, den Nutzer in seiner Bewegung vollständig zu unterstützen. Demgemäß wird ein Verfahren zum Steuern eines die Gehhilfe bildenden Exoskeletts beschrieben, das als Verfahrensschritte das Empfangen von Eingabedaten umfasst, die einen gewünschten Bewegungsablauf bezeichnen, sowie das Auslesen vorprogrammierter Bewegungsdaten aus einem Speicher, wobei die Bewegungsdaten eine oder mehrere sequentielle Instruktionen bezeichnen, von denen eine Instruktion das für die Ausführung der Bewegung nötige Aufsetzen eines Fußes auf den Boden betrifft. Diese Instruktion wird bei dem beschriebenen Verfahren nach Messdaten angepasst, die eine Änderung in der Neigung des Bodens anzeigen.

In dem Dokument "Exoskeletons für Human Power Augmentation", von H. Kazerooni, IEEE 2005 ist ein Exoskelett beschrieben, welches sich aus einem Exoskelet für die oberen Extremitäten und für die unteren Extremitäten zusammensetzt. Die hier beschriebenen Exoskelette dienen zur Verstärkung einer von einem Menschen aufgebrachten Kraft sowie zur Unterstützung eines Arbeiters bei Montageprozessen.

Aus der EP 2 198 810 A1 ist eine Rotationsjustiervorrichtung für eine Kraftunterstützungsvorrichtung bekannt umfassend eine Rotationsvorrichtung, welche eine Vielzahl von über Rotationsachsen miteinander gekoppelte Elemente aufweist sowie ein Begrenzungsmittel zur Begrenzung der Rotationsbewegung.

Ferner ist aus dem Dokument "Development of Human-Robot Interfacing Method for Assistive Wearable Robot of the Human Upper Extremities " von HeeDon Lee et.al., IEE 2008 ein Mensch-Roboter-Schnittstellen-Verfahren bekannt für einen tragbaren Roboter für unterstützte menschliche obere Extremitäten. Das Verfahren verbindet den Mensch und den Roboter mit einer mehrachsigen Wägezelle und misst die relative Kraft zwischen dem Menschen und dem Roboter.

Bei den bekannten Exoskeletten ist die bedienende Person in ihren Bewegungen grundsätzlich frei. Dadurch besteht die Möglichkeit durch unterschiedliche Ursachen ausgelöster Fehlbedienungen, die nicht nur zu fehlerhaften Arbeitsergebnissen, sondern auch zu Schäden und Unfällen führen können.

### Darstellung der Erfindung: Aufgabe, Lösung, Vorteile

Die Erfindung hat die Aufgabe, einen Arbeitstisch aufweisend eine Vorrichtung zu schaffen, durch die außer einer Lasterleichterung auch eine Verringerung der Fehlbedienungen und eine Steigerung der Genauigkeit eines durchzuführenden Bewegungsablaufs erzielt wird.

Diese Aufgabe wird gelöst durch einen Arbeitstisch aufweisend eine Vorrichtung zum Durchführen eines Bewegungsablaufs mit einer Stützeinrichtung, die mit zumindest einem Körperteil einer Person koppelbar ist zum steuerbaren, insbesondere programmierbaren, Stützen und/oder Führen wenigstens einer vom Bewegungsablauf umfassten Teilbewegung des zumindest einen Körperteils der Person, wobei die Vorrichtung über Arretierungselemente mit dem Arbeitstisch verbunden ist.

Dabei ist im Zusammenhang der vorliegenden Erfindung unter einem Bewegungsablauf ein kinematischer Vorgang, d.h. ein Bewegungsvorgang, zu verstehen, bei dem die Stützeinrichtung der Vorrichtung und das zumindest eine Körperteil der Person miteinander gekoppelt sind und durch diese Kopplung zusammenwirken. Die Kopplung erfolgt dabei bevorzugt mechanisch, indem z.B. das zumindest eine Körperteil der Person mit zumindest einem dafür bestimmten Teil der Stützeinrichtung verbunden wie beispielweise angeschnallt wird, oder die Person zieht das betreffende Teil der Stützeinrichtung wie ein Kleidungsstück an. Dies kann in einer einem Exoskelett entsprechenden Weise vorgenommen werden, d.h. die Stützeinrichtung der erfindungsgemäßen Vorrichtung ist bevorzugt als Exoskelett ausgebildet. Dadurch kann die wenigstens eine vom Bewegungsablauf umfasste Teilbewegung unmittelbar von dem zumindest einen Körperteil der Person auf die Stützeinrichtung und umgekehrt übertragen werden.

Der Bewegungsablauf umfasst dabei wenigstens eine, vorzugsweise aber mehrere Teilbewegungen des zumindest einen Körperteils der Person. Jede einzelne Teilbewegung wird dabei durch die Vorrichtung steuerbar gestützt und/oder geführt. Alle Teilbewegungen wirken zur Gestaltung des Bewegungsablaufs zusammen, und das steuerbare, insbesondere programmierbare, Stützen und/oder Führen der wenigstens einen Teilbewegung des zumindest einen Körperteils der Person ist derart ausgebildet, dass sich insgesamt der gewünschte Bewegungsablauf ergibt. Dabei erfolgt das Steuern bevorzugt nach einem vorgebbaren Programm, welches den gewünschten Bewegungsablauf beschreibt und steuert.

Dabei ist ein besonderer Kern der vorliegenden Erfindung darin zu sehen, dass ein Arbeitstisch eine Vorrichtung aufweist, die dazu ausgestaltet ist, einerseits von der Person mit der wenigstens einen vom Bewegungsablauf umfassten Teilbewegung ihres zumindest einen Körperteils geführt zu werden, andererseits aber auch das zumindest eine Körperteil der Person zugleich von derselben Vorrichtung vor allem geführt und dazu wahlweise gestützt wird. Bei mehreren vom Bewegungsablauf umfassten Teilbewegungen kann dies für eine Auswahl von Teilbewegungen oder für alle Teilbewegungen erfolgen. Es erfolgt dabei nicht nur und nicht in erster Linie eine Kraftunterstützung des zumindest einen Körperteils der Person, sondern die wenigstens eine Teilbewegung und damit bevorzugt der diese wenigstens eine Teilbewegung umfassende Bewegungsablauf in seiner Gesamtheit sind von der Vorrichtung in ihrer räumlich-zeitlichen Abfolge steuerbar, so dass dem zumindest einen Körperteil der Person eine bestimmte, gewünschte geometrische Gestaltung der wenigstens einen Teilbewegung bzw. des gesamten Bewegungsablaufs vorgegeben werden kann. Die Vorrichtung ist von der Person führbar ausgebildet, und zugleich kann die Person von der Vorrichtung geführt werden, insbesondere zur Korrektur einer oder mehrerer Teilbewegung bzw. des Bewegungsablaufs. Dies erfolgt bevorzugt nach einem vorgebbaren Programm. Die erfindungsgemäße Vorrichtung ist somit für ein vorgebbares, insbesondere steuerbares, vorzugsweise programmierbares Stützen und/oder Führen wenigstens einer aus einer Anzahl vom Bewegungsablauf umfasster Teilbewegungen ausgestaltet, und der Bewegungsablauf gemäß der Erfindung ist ein Bewegungsvorgang, der von der Vorrichtung und einem oder mehreren ausgewählten Körperteilen der Person im wesentlichen gemeinsam ausgeführt wird, wobei das bzw. die ausgewählten Körperteile der Person durch die Vorrichtung gestützt werden und ein gegen- und wechselseitiges Führen des bzw. der ausgewählten Körperteile der Person durch die Vorrichtung und umgekehrt erfolgt.

Bei Gebrauch des erfindungsgemäßen Arbeitstisches werden einem Menschen lediglich Grenzen für bestimmte, für das Ergebnis des durchzuführenden Bewegungsablaufs oder für den Menschen nachteilige, gefährliche oder schädliche Abweichungen von vorgegebenen, idealen Teilbewegungen an die Hand gegeben, oder er erhält eine Rückmeldung beim Erreichen oder Überschreiten derartiger Grenzen. Darüber hinaus sollen im Rahmen der vorliegenden Erfindung durch die beschriebene Vorrichtung keine Vorgaben an einen Menschen, mit dem diese Vorrichtung gekoppelt sein kann, erfolgen. Die erfindungsgemäße Vorrichtung wahrt somit stets einen Vorrang des Menschen in einer Hierarchie zwischen Mensch und Maschine.

Für die Steuerung der wenigstens einen vom Bewegungsablauf umfassten Teilbewegung des bzw. der ausgewählten Körperteile sind bevorzugt ein oder mehrere Bewegungskorridore und/oder Sequenzen von Teilbewegungen vorgebbar, insbesondere programmierbar. Ein Bewegungskorridor ist dabei derjenige Raumbereich, innerhalb dessen die zu steuernde Teilbewegung oder der Bewegungsablauf des bzw. der ausgewählten Körperteile erfolgen oder erfolgen sollen. Eine Sequenz von Teilbewegungen umfasst dabei eine zeitlich-räumliche Abfolge der Teilbewegungen, wobei wenigstens einige dieser Teilbewegungen auch wenigstens zum Teil gleichzeitig erfolgen können. Demgemäß werden als Teilbewegungen im Zusammenhang der vorliegenden Erfindung zeitlich aufeinanderfolgende oder wahlweise auch gleichzeitige Teile des gesamten Bewegungsablaufs des Bewegungsablaufs verstanden, die von einem Teil des wenigstens einen Körperteils oder wahlweise dem gesamten Körperteil ausgeführt werden. Dies kann jede Art und Richtung von Bewegung umfassen mit jeder möglichen Bewegungsgeschwindigkeit, Strecke, Wiederholfrequenz usw.; es kann sich z.B. um eine geradlinige Bewegung oder eine Bewegung entlang einer gekrümmten Bewegungsbahn, um eine einmalige oder wiederholte Bewegung, um eine Zitterbewegung usw. handeln.

Bei der genannten Person kann es sich außer um einen Menschen allgemein auch um ein anderes Lebewesen handeln, bevorzugt um ein Haustier oder ähnliches. So kann ein erfindungsgemäßer Arbeitstisch z.B. dazu ausgestaltet sein, einen Bewegungsablauf eines derartigen Haustieres zu führen. Dies ließe sich z.B. in der Gebrauchshundedressur dazu einsetzen, bestimmte Kommandos an das betreffende Tier zu trainieren, indem die Vorrichtung dazu programmiert ist, einen mit der Ausführung des Kommandos verbundenen, vom Tier vorzunehmenden Bewegungsablauf zu führen, d.h. wenigstens einen Bewegungskorridor vorzugeben und damit zugleich unerwünschte Bewegungen zu verhindern.

Durch die Erfindung wird somit ein Arbeitstisch mit einer Vorrichtung geschaffen, die zumindest einem Teil eines Körpers einer Person, d.h. allgemein eines Lebewesens und insbesondere eines Menschen, außer einer Lasterleichterung vor allem eine Unterstützung und Anleitung durch eine vorgebbare, insbesondere programmierbare Führung von Bewegungen gibt.

Als besonderer Vorteil des erfindungsgemäßen Arbeitstisches umfassend die Vorrichtung ist anzusehen, dass diese aufgabenangepasst aus einer Kombination einer technischen und einer biologischen Kinematik konfigurierbar ist. Die technische Kinematik kann dabei parallel und/oder seriell zu der biologischen Kinematik angeordnet und in unterschiedlichsten Varianten ausgestaltet sein.

Vorteilhafte Ausgestaltungen der Erfindung sind in den Unteransprüchen gekennzeichnet.

Als Randbedingung für eine einwandfreie Funktion des erfindungsgemäßen Arbeitstisches sind für deren Konstruktion die kinematischen Gegebenheiten, d.h. die Anatomie, des zumindest einen Körperteils der Person zu berücksichtigen. Dazu ist nach einer bevorzugten Weiterbildung der Erfindung die Stützeinrichtung mit wenigstens einer Gelenkanordnung ausgestaltet, die zum Anpassen einer Kinematik der Vorrichtung an anatomische Eigenschaften des zumindest einen Körperteils der Person und/oder zum Übertragen des Bewegungsablaufs zwischen der Vorrichtung und dem zumindest einen Körperteil der Person ausgebildet ist.

Demgemäß ist die Stützeinrichtung in vorteilhafter Weise gestellartig gelenkig aufgebaut, insbesondere als Exoskelett. Darin kann eine gemäß dieser Weiterbildung der Erfindung vorgesehene Gelenkanordnung jede Art beweglicher Verbindungen zwischen wenigstens zwei Konstruktionselementen der Stützeinrichtung beinhalten, also drehbar, schiebbar, luftkissenartig usw. ausgeführt sein. Mit dem Begriff Kinematik ist dabei allgemein die Gestaltung der Stützeinrichtung zur Ausführung von Bewegungen in einer vorgebbaren Anzahl von Richtungen mit einer vorgebbaren Anzahl von Freiheitsgraden bezeichnet, die vorteilhaft den anatomischen Eigenschaften des zumindest einen Körperteils der Person möglichst genau angepasst sind, um eine optimale Stütz und/oder Führungsfunktion der Vorrichtung zu erreichen.

Gemäß einer weiteren Ausgestaltung der Erfindung ist die Stützeinrichtung mit wenigstens einem Bewegungsmittel ausgebildet zum Beaufschlagen der Stützeinrichtung an der wenigstens einen Gelenkanordnung mit einer Stellkraft und/oder einer Stellbewegung. Dabei erfordert eine Stellbewegung zwar prinzipiell eine - ggf. geringe - Stellkraft, doch steht erfindungsgemäß das Ausführen einer Stellbewegung durch die Vorrichtung gegenüber dem reinen Aufbringen einer Kraft im Vordergrund.

Nach einer vorteilhaften Fortbildung der Erfindung ist das wenigstens eine Bewegungsmittel mit wenigstens einem motorischen Antrieb ausgebildet. Als motorische Antriebe können alle Arten von kraft- und/oder bewegungsgebenden Einrichtungen zum Einsatz kommen, wie als bevorzugtes Beispiel Elektromotoren und davon insbesondere Stellmotoren, Linearmotoren, oder dergleichen, aber z.B. auch schwingungserzeugende Antriebe, Druckluftantriebe und andere. So kann nach einer weiteren Ausgestaltung der Erfindung das wenigstens eine Bewegungsmittel mit schwingungsdämpfenden Aktoren ausgebildet sein. Diese schwingungsdämpfenden Aktoren sind bevorzugt einsetzbar, wenn das Führen des wenigstens einen Körperteils der Person dazu vorgesehen ist, eine Zitterbewegung dieses Körperteils zu kompensieren oder zu unterdrücken.

Nach einer anderen Ausführungsform der Erfindung umfasst die Vorrichtung wenigstens eine Sensoreinrichtung zum Erfassen wenigstens eines wenigstens eine Teilbewegung des zumindest einen Körperteils der Person einleitenden und/oder anzeigenden und/oder auslösenden Körpersignals und/oder zum Erfassen wenigstens einer von dem zumindest einen Körperteil der Person ausgeübten Teilbewegung.

Die erfindungsgemäß vorgesehene wenigstens eine Sensoreinrichtung kann dabei der jeweilig zu erfüllenden Aufgabe gemäß in unterschiedlicher Weise ausgestaltet sein, wobei einerseits alle Arten dazu anwendbarer Sensoren umfasst sein können, die dazu ausgebildet sind, wenigstens einen Teil einer der genannten Teilbewegungen aufzunehmen, andererseits auch Sensoren zum Einsatz gelangen, mit denen Messgrößen erfaßbar sind, durch die bereits vor Beginn dieses wenigstens einen Teils der genannten Teilbewegungen, d.h. vor dem Ausführen eines zu stützenden und/oder zu führenden Bewegungsvorgangs innerhalb des Bewegungsablaufs auf diesen Bewegungsvorgang geschlossen, also eine Voraussage getroffen werden kann. Solche Sensoren können als vorausschauende Sensoren bezeichnet werden. Die erfindungsgemäß vorgesehene wenigstens eine Sensoreinrichtung kann dafür auch zur Erfassung eines Bewegungsvorgangs eines nicht mit der Vorrichtung gekoppelten Körperteils der Person ausgebildet sein, sofern sich daraus wenigstens ein wenigstens eine Teilbewegung des zumindest einen Körperteils der Person einleitenden und/oder anzeigenden und/oder auslösenden Körpersignal gewinnen lässt.

Dazu ist in einer bevorzugten Weiterbildung der Erfindung die wenigstens eine Sensoreinrichtung als Bewegungssensor zum Erfassen wenigstens einer von dem zumindest einen Körperteil der Person ausgeführten Teilbewegung ausgebildet. Eine Sensoreinrichtung mit dieser Ausgestaltung dient dem Erfassen eines tatsächlich von dem betrachteten Körperteil der Person ausgeübten Bewegungsvorgangs, insbesondere einer Teilbewegung. Bevorzugt ist eine derartige Sensoreinrichtung an der wenigstens einen Gelenkanordnung angeordnet. Es ist dann ein Bewegungsvorgang der Gelenkanordnung als Maß für den betreffenden Bewegungsvorgang, z.B. die Teilbewegung des Körperteils der Person unmittelbar an der wenigstens einen Gelenkanordnung erfassbar. Vorteilhaft ist eine solche Sensoreinrichtung als z.B. Winkelsensor oder linearer Wegaufnehmer ausgebildet.

In einer anderen bevorzugten Weiterbildung der Erfindung ist die wenigstens eine Sensoreinrichtung zum Erfassen wenigstens einer von dem zumindest einen Körperteil der Person ausgeübten Kraft ausgebildet. Mit einem oder mehreren derartiger Kraftsensoren kann z.B. auch auf eine beabsichtigte Teilbewegung des zumindest einen Körperteil der Person bereits bei Beginn des Aufbringens der Kraft geschlossen werden, d.h. bevor der eigentliche Bewegungsvorgang ausgeführt wird. Kraftsensoren lassen sich somit unter anderem als vorausschauende Sensoren einsetzen.

In einer noch anderen bevorzugten Weiterbildung der Erfindung ist die wenigstens eine Sensoreinrichtung zum Erfassen wenigstens einer von dem zumindest einen Körperteil der Person ausgeübten Muskelanspannung ausgebildet. Dabei kann die Muskelanspannung nicht nur mit den vorstehend beschriebenen Kraftsensoren, sondern vorteilhaft durch entsprechend am Körper der Person angelegte Elektroden gemessen werden. Auch Muskelsensoren dieser Art lassen sich somit insbesondere als vorausschauende Sensoren einsetzen.

Nach einer noch anderen bevorzugten Weiterbildung der Erfindung ist die wenigstens eine Sensoreinrichtung zum Erfassen wenigstens einer von der Person ausgeübten Augenbewegung ausgebildet. Dabei wird bevorzugt Gebrauch von der sogenannten Pupillographie gemacht, bei der durch Bildaufnahme des Gesichtsfeldes der Person, insbesondere eines Menschen, und Bildauswertung die Stellung der Augen aus dem Abbild der Pupillen ermittelt wird und damit die Blickrichtung bzw. aus deren zeitlicher Änderung die Augenbewegung feststellbar ist. Aus der Augenbewegung bzw. der Blickrichtung kann auf einen vorzugsweise in der Blickrichtung beabsichtigten Bewegungsvorgang geschlossen werden. Somit ist auch eine derartige Sensoreinrichtung zum Erfassen wenigstens einer von der Person ausgeübten Augenbewegung insbesondere als vorausschauender Sensor einsetzbar.

Zusammengefasst ist die Vorrichtung mit einer oder mehreren Sensoreinrichtungen ausgestattet, mit denen eine möglichst frühzeitige Erkennung eines Bewegungsvorgangs, insbesondere einer Teilbewegung des Körperteils der Person möglich ist. Auf der Grundlage eines oder mehrerer von diesen Sensoreinrichtungen gelieferter Messsignale sind der oder die motorischen Antriebe derart steuerbar, dass der genannte Bewegungsvorgang in dem vorbestimmten Bewegungskorridor in vorbestimmter zeitlicher Abfolge stattfindet, und Abweichungen davon vorzugsweise durch ein Führen des Körperteils der Person, alternativ durch eine Alarmierung, entgegengewirkt wird. Neben den Ausgestaltungsformen als Positions-, Bewegungs-, Kraft- und Muskelsensoren sowie mit Einsatz der Pupillographie können auch Sensoreinrichtungen mit einer Bildauswertung zur Erfassung einer Bewegung evtl. auch eines nicht mit der Vorrichtung gekoppelten Körperteils der Person zur Anwendung gelangen. Auch kann eine Spracheingabe vorgesehen sein, um das erfindungsgemäße Stützen und/oder Führen des betreffenden Bewegungsvorgangs zu steuern. Sensorisch erfasst werden bereits eine offenbare bzw. offensichtliche oder vermutliche Absicht zu einem Bewegungsvorgang sowie der Bewegungsvorgang selbst.

Nach einer anderen Ausführungsform der Erfindung weist die Vorrichtung eine Steuereinrichtung zum Steuern, insbesondere zum programmierbaren Steuern, der Stützeinrichtung zum Stützen und/oder Führen der wenigstens einen vom Bewegungsablauf umfassten Teilbewegung des zumindest einen Körperteils der Person auf, wobei die Steuereinrichtung eingerichtet ist zum Empfangen wenigstens eines Messdaten umfassenden Messsignals von der wenigstens einen Sensoreinrichtung, zum Auswerten des wenigstens einen Messsignals, zum durch wenigstens einen Steuerparameter gesteuerten Ableiten wenigstens eines Steuersignals aus dem wenigstens einen Messsignal und zum Steuern der Stützeinrichtung durch das wenigstens eine Steuersignal.

Die Steuereinrichtung ist dabei eingerichtet zum Steuern der Stützeinrichtung bevorzugt an der oder den Gelenkanordnungen über das wenigstens eine Bewegungsmittel. Dazu werden aus einem oder mehreren von der oder den Sensoreinrichtungen gelieferten Messsignalen insbesondere gemäß einer Programmierung der Steuereinrichtung ein oder mehrere Steuersignale gewonnen. Der oder die Steuerparameter steuern dabei das Ableiten des bzw. der Steuersignale aus dem bzw. den Messsignalen. Damit ist das Steuerungsverhalten der erfindungsgemäßen Vorrichtung unterschiedlichen Randbedingungen, z.B. individuellen Merkmalen der Person anpassbar. Bevorzugt können auf diese Weise Körpermaße, eine durch das Lebensalter oder anderweitige Umstände bedingte Konstitution oder sonstige Eigenschaften der Person, die für die Ausführung des Bewegungsablaufs oder von Teilen desselben bedeutsam sind, beim gesteuerten Führen und/oder Stützen Berücksichtigung finden. Außerdem lassen sich damit besondere Bedingungen, die durch eine spezielle Gestaltung des gewünschten Bewegungsablaufs oder einer oder mehrerer Teilbewegungen an die Steuerung gestellt werden, vorzugsweise durch orts- und/oder zeitabhängige Steuerparameter, berücksichtigen.

Dabei können in der Steuereinrichtung für die unterschiedlichen Randbedingungen angepasste Variationen der wenigstens einen vom Bewegungsablauf umfassten Teilbewegung oder auch des gesamten Bewegungsablaufs gespeichert sein, zwischen denen nach Maßgabe des wenigstens einen Steuerparameters ausgewählt, d.h. umgesteuert wird. Die Variationen sind insbesondere auf Personen unterschiedlichen Alters, unterschiedlicher Größe, unterschiedlicher Geschicklichkeit usw. sowie auf unterschiedliche Tätigkeiten, z.B. unterschiedliche Montagetätigkeiten, z.B. für unterschiedliche Produkte, abgestimmt.

Insgesamt wird eine Mehrkanalverknüpfung zwischen der Vorrichtung und der Person geschaffen.

Gemäß einer bevorzugten Weiterbildung der Erfindung ist wenigstens eines des wenigstens einen Steuersignals vorgesehen zum Einstellen wenigstens eines Sollwertes für das Steuern des Stützens und/oder Führens wenigstens einer der wenigstens einen vom Bewegungsablauf umfassten Teilbewegung des zumindest einen Körperteils der Person. Dadurch, dass das bzw. die Steuersignale aus dem bzw. den Messsignalen abgeleitet werden, ergibt sich eine sensorgestützte Sollwertvorgabe durch die Steuereinrichtung. Insbesondere sind dabei die Sollwerte für die wenigstens eine Teilbewegung abhängig von einer bevorzugt kontinuierlichen Erfassung der Messdaten einstellbar.

Gemäß einer bevorzugten Weiterbildung der Erfindung ist die Steuereinrichtung eingerichtet zum Erzeugen des wenigstens einen Steuerparameters aus dem wenigstens einen Messsignal.

Diese Weiterbildung der Erfindung ist insbesondere geschaffen und geeignet für eine individuelle Anpassung einer Lernkurve der Person. Die Steuerparameter sind dabei erzeugbar aus Messsignalen, die einen Rückschluss auf die Lernfähigkeit der Person erlauben. Beispielsweise kann in einem ersten Lernschritt eine Teilbewegung eines Bewegungsablaufs oder auch der gesamte Bewegungsablauf selbst mit bestimmten Toleranzen für einen vorgegebenen Bewegungskorridor eingestellt sein. Je nachdem, wie die auszuführenden Teilbewegungen bzw. der auszuführende Bewegungsablauf von der Person ausgeführt werden, kann eine Variation des wenigstens einen Steuerparameters vorgesehen sein und damit eine oder nacheinander mehrere andere Varianten mit anderen Toleranzen für den Bewegungskorridor zur Ausführung gelangen, bis ein vorbestimmtes Endstadium des Lernvorgangs, d.h. ein letzter Lernschritt, erreicht ist. Die beschriebene Weiterbildung der Erfindung ermöglicht dabei durch eine Intensivierung des Trainings des Bewegungsablaufs eine Verkürzung der Lernkurve.

Sind die Steuerparameter erzeugbar aus Messsignalen, die einen Rückschluss auf weitere Merkmale der Person erlauben, wie z.B. deren Alter oder Geschicklichkeit, sind die nach Maßgabe des wenigstens einen Steuerparameters auswählbaren, d.h. umsteuerbaren Variationen der wenigstens einen vom Bewegungsablauf umfassten Teilbewegung oder auch des gesamten Bewegungsablaufs, d.h. die Variationen des vorgegebenen Bewegungskorridors, sensorgestützt auf Personen mit diesen Merkmalen, wie z.B. unterschiedlichen Alters, unterschiedlicher Geschicklichkeit usw. abstimmbar.

Bei einer anderen bevorzugten Ausführungsform der Erfindung bildet der Bewegungsablauf wenigstens einen Teil einer handwerklichen oder handwerksähnlichen Tätigkeit der Person. Dabei kann das Gebiet einer derartigen Tätigkeit sowie die Art ihrer Ausführung sehr weit gefasst sein und insbesondere verschiedenste Variationen des Führens und/oder Stützens vieler unterschiedlicher Körperteile einzeln oder in ihrem Zusammenwirken bei der Tätigkeit umfassen. Als handwerkliche Tätigkeit ist dabei jede Tätigkeit im klassischen Handwerk und gleichermaßen in der Industrie umfasst wie Bearbeitung und Montage von Werkstücken aller Art und die Bedienung dafür eingesetzter Werkzeuge und/oder Maschinen. Handwerksähnliche Tätigkeiten umfassen alle sonstigen, von Personen, insbesondere Menschen, ausgeübten leichten und/oder schweren körperlichen Tätigkeiten und allgemeinen Hantierungen verschiedenster Arten, z.B. das Bewegen von Gegenständen und/oder Lasten, Schönschreiben, usw.

Zum Ausführen der handwerklichen oder handwerksähnlichen Tätigkeit durch die Person ist die Vorgabe eines oder mehrerer Bewegungskorridore für den zu absolvierenden Bewegungsablauf bzw. für die davon umfassten Teilbewegungen besonders zweckmäßig. Dadurch wird die Person zum Erzielen eines korrekten Ablaufs der Tätigkeit geführt. Fehlerhafte oder sicherheitsgefährdende Abweichungen vom vorgegebenen Bewegungsablauf oder von vorgegebenen Teilbewegungen sind aufzeigbar und/oder verhinderbar. Weicht die Person bei einer Teilbewegung vom vorgegebenen Bewegungskorridor ab, ist eine Reaktion in Form einer Rückmeldung beispielsweise entweder als Alarmierung vorzugsweise optischer oder akustischer Art auslösbar, wie etwa über eine Brille mit Einblendung einer Warnanzeige (sogenannte Google-Brille), eine Alarmlampe oder eine Sprachausgabe, oder auf das betreffende Körperteil wird durch die Bewegungsmittel der Stützeinrichtung eine führende, vorzugsweise sanft einsetzende Gegenkraft ausgeübt und das Körperteil so wieder zurück in den Bewegungskorridor hinein bewegt.

Aus der Gesamtheit der vorteilhaft mit Hilfe des erfindungsgemäßen Arbeitstisches von der Person durchführbaren handwerklichen Tätigkeiten bildet der Bewegungsablauf bevorzugt wenigstens einen Teil einer Montagetätigkeit. Der erfindungsgemäße Arbeitstisch ermöglicht dabei in besonders vorteilhafter Weise ein Stützen und/oder Führen des wenigstens einen Körperteils der Person gleichermaßen bei leichten, feinen und komplizierten als auch bei schweren, groben und kräftezehrenden Montagetätigkeiten.

Durch das Stützen des wenigstens einen Körperteils der Person kann wenigstens ein Teil des Gewichts eines bei der Montagetätigkeit zu handhabenden Werkstücks, Bauteils oder dergleichen von der erfindungsgemäßen Vorrichtung abgefangen und damit die Person entsprechend entlastet werden. Durch diese Entlastung von körperlicher Beanspruchung wird für die Person die Arbeit erleichtert, die Ermüdung verringert, die Gesundheit geschont und dadurch Krankheiten, insbesondere durch körperliche Verschleißerscheinungen, vorgebeugt.

Das erfindungsgemäße Führen des wenigstens einen Körperteils der Person wird bei einer Montagetätigkeit über eine Verringerung der Ermüdung und einseitigen Belastung hinaus vorteilhaft dazu eingesetzt, die Person für die betreffende Tätigkeit anzuleiten. Durch die Vorgabe eines Bewegungskorridors für einen auszuführenden Montageschritt wird erreicht, dass dieser Montageschritt mit einem in vorgesehener Weise korrekten Bewegungsvorgang ausgeführt wird. Ein in diesem Montageschritt an einen bestimmten Ort, insbesondere einen vorgegebenen Einbauort, zu verbringendes Bauteil wird durch das erfindungsgemäße Führen präzise dorthin gebracht. Ein in einem solchen Montageschritt von einen bestimmten Ort, insbesondere einem vorgegebenen Bereitstellungsort wie z.B. einem Materialregal, einer Teilekiste, einem Förderer oder dergleichen, aufzunehmendes Bauteil wird durch das erfindungsgemäße Führen auch präzise dort aufgenommen. Dies schließt Verwechslungen aus, reduziert so Montagefehler und beschleunigt den Arbeitsvorgang, ohne dass die Person die einzelnen Bewegungsvorgänge selbst schneller ausführen müsste.

Durch eine zeitlich aufeinanderfolgende, bestimmte Vorgabe einer Abfolge bzw. Sequenz von nacheinander abzufahrenden Bewegungskorridoren können einzelne Montageschritte zu einer Gesamtmontage zusammengesetzt werden. Das erfindungsgemäße Führen gestattet dabei die Vorgabe einer bestimmten Reihenfolge, in der die einzelnen Montageschritte abzuarbeiten sind, durch Steuern der Bewegungsabläufe entlang der nacheinander wirksamen Bewegungskorridore, die nur bestimmte Bewegungen in bestimmter zeitlicher Reihenfolge zu bestimmten Orten bzw. Ortskoordinaten hin zulassen. Dadurch ist die Arbeit nur in der vorgegebenen Reihenfolge der vorbestimmten Montageschritte möglich. Dies schließt Verwechslungen von Bauteilen und der Abfolge ihres Einbaus aus, weil nacheinander zu jedem der Montageschritte nur Zugriff auf bestimmte räumliche Bereiche zugelassen ist, in denen die richtigen Bauteile bereitliegen, oder Zugang zu den richtigen Montagestellen für das Bauteil, dessen Einbau im betreffenden Montageschritt vorgesehen ist, besteht. Durch die Erfindung wird so eine Prozesskontrolle, d.h. eine Überwachung der ausgeführten Montagetätigkeit auf ihren korrekten Ablauf und die Qualität des damit erzielten Ergebnisses, auf einfache Weise ohne zusätzlichen Aufwand integriert.

Nach Wunsch der Person läßt sich insbesondere das Führen durch die Vorrichtung, aber auch das Stützen, generell und insbesondere bei der Montagetätigkeit wahlweise zu- oder abschalten.

Die Erfindung ermöglicht somit ein ermüdungsärmeres Arbeiten. Die Sicherheit wird einmal durch die geringere Ermüdung und die damit länger anhaltende Konzentrationsfähigkeit der Person gefördert, zum anderen ergibt sich ein sichereres Arbeiten dadurch, dass unfallträchtigen Handlungen entgegengewirkt wird. Ein präziseres, konzentrierteres und zügigeres Arbeiten durch die genaue, zielstrebige Führung der Person durch die Vorrichtung erzielt, da mit der Vorrichtung eine zeitliche Straffung des Ablaufs der Montagearbeit und Erhöhung der räumlichen Genauigkeit der für die Montagearbeit durchzuführenden Handgriffe, die durch den bzw. die Bewegungskorridore abgegrenzt werden, bewirkt wird.

Die vorstehend exemplarisch für Montagetätigkeiten aufgelisteten Vorteile und Eigenschaften gelten in entsprechend angepasster Form auch für andere und bevorzugt für handwerkliche oder handwerksähnliche Tätigkeiten der Person.

In einer anderen bevorzugten Ausführungsform ist die Vorrichtung eingerichtet zum Stützen und/oder Führen wenigstens einer vom Bewegungsablauf umfassten Teilbewegung des zumindest einen Körperteils der Person, wobei das zumindest eine Körperteil der Person ein Werkzeug hält und/oder führt. Eine derart gestützte und/oder geführte Betätigung eines Werkzeugs weist grundsätzlich die gleichen Eigenschaften und Vorteile auf, wie sie zu den handwerklichen und insbesondere den Montagetätigkeiten vorstehend beschrieben sind, wobei an die Stelle des Werkstücks jetzt das Werkzeug tritt.

Eine andere vorteilhafte Ausgestaltung der Erfindung ist dadurch gekennzeichnet, dass die Vorrichtung eingerichtet ist zum Stützen und/oder Führen wenigstens einer vom Bewegungsablauf umfassten Teilbewegung des zumindest einen Körperteils der Person, wobei die Vorrichtung oder wenigstens ein Konstruktionselement der Stützeinrichtung mit wenigstens einem Werkzeug verbindbar ist. Gegenüber einem Halten und/oder Führen des Werkzeugs durch das zumindest eine Körperteil der Person ist mit einer unmittelbaren Verbindung des Werkzeugs mit der Vorrichtung eine Steigerung der Präzision und der Wiederholgenauigkeit bei der Ausführung eines Bewegungsvorgangs erreichbar. Ein Halten und/oder Führen des Werkzeugs durch das zumindest eine Körperteil der Person nutzt dagegen in vorteilhafter Weise eine Sensorik dieses oder anderer Körperteile, z.B. einen Tastsinn oder Gesichtssinn, und biologische Steuerungsmechanismen der Person, insbesondere Nervenbahnen, Gehirn und Muskeln, in ihrer Gesamtheit auch als Biokreislauf bezeichnet, zum Ausführen des Bewegungsvorgangs.

Gemäß dieser Ausgestaltung der Erfindung kann sowohl ein mit der Vorrichtung fest verbundenes Werkzeug vorgesehen sein, oder es ist wahlweise eine Verbindung mit einem oder mehreren aus einer Auswahl von Werkzeugen möglich, wobei die Werkzeuge vorteilhaft wechselbar sind.

Die Wechselbarkeit der Werkzeuge wird nach einer vorteilhaften Weiterbildung der Erfindung dadurch erreicht, dass eine Verbindung der Vorrichtung oder wenigstens eines Konstruktionselements der Stützeinrichtung mit dem wenigstens einen Werkzeug über wenigstens eine Schnittstelle erfolgt, bei der es sich bevorzugt um wenigstens eine genormte Schnittstelle handelt, über die verschiedenartige Werkzeuge mit der Vorrichtung oder dem wenigstens einen Konstruktionselement der Stützeinrichtung verbindbar sind.

Nach einer bevorzugten Fortbildung der Vorrichtung ist die wenigstens eine Schnittstelle eingerichtet zur mechanischen und/oder energetischen und/oder informationstechnischen Verbindung des wenigstens einen Werkzeugs.

Mit dieser Ausgestaltung ist der Einsatz einer Vielzahl unterschiedlicher Werkzeuge, und zwar sowohl einfacher Handwerkzeuge wie auch komplizierter Werkzeugmaschinen, möglich. Dabei bewirkt die mechanische Verbindung durch die Schnittstelle ein Halten, Führen und Positionieren sowie eine Kraftübertragung von der Vorrichtung bzw. der Stützeinrichtung auf das Werkzeug, z.B. für einen Werkzeugvorschub. Die energetische Verbindung dient der Übertragung von Energie von der Vorrichtung auf das Werkzeug, z.B. über einen elektrischen Anschluss, einen Druckluftanschluss, usw., insbesondere wenn als Werkzeug eine Werkzeugmaschine wie z.B. eine Bohrmaschine, ein Schrauber oder dergleichen vorgesehen ist. Die informationstechnische Verbindung dient einer Datenübertragung zwischen der Vorrichtung einerseits und dem Werkzeug andererseits. Damit sind insbesondere beim Einsatz gesteuerter Werkzeugmaschinen als Werkzeuge Steuerungsdaten von der Vorrichtung an das Werkzeug und in umgekehrter Richtung ggf. Messdaten vom Werkzeug an die Vorrichtung übertragbar. Beispielsweise kann vorgesehen sein, zum Betrieb einer Bohrmaschine Steuerungsdaten zum Einstellen eines Sollwertes der Bohrspindel-Drehzahl von der Vorrichtung an die Bohrmaschine und Messdaten über einen erreichten Istwert dieser Bohrspindel-Drehzahl von der Bohrmaschine an die Vorrichtung zu übertragen. Allgemein ist eine Einrichtung der wenigstens einen Schnittstelle zur informationstechnischen, aber auch zur energetischen Verbindung des wenigstens einen Werkzeugs dann vorteilhaft, wenn das Werkzeug eine eigene Kinematik aufweist, wie dies insbesondere bei einer Werkzeugmaschine der Fall ist. Nach den Begriffen der Kinetik, d.h. der Lehre der Bewegung von Punkten und Körpern im Raum, kann das Werkzeug sowohl leistungs- als auch wegerzeugende Achsen beinhalten.

Für eine präzise Funktion der Vorrichtung, insbesondere für ein präzises Zusammenwirken der Vorrichtung mit der Person, ist eine genaue und zuverlässige räumliche Zuordnung der Konstruktionselemente der Stützeinrichtung der Vorrichtung zu dem wenigstens einen Körperteil der Person wichtig. Dazu ist gemäß einer anderen Ausgestaltung der Erfindung wenigstens ein Referenzierungselement zum Festlegen einer definierten Positionierung zwischen der Vorrichtung, insbesondere wenigstens eines Konstruktionselements der Stützeinrichtung, und dem zumindest einen Körperteil der Person vorgesehen. Das wenigstens eine Referenzierungselement schafft an wenigstens einem Punkt des Körperteils der Person und einem diesem zugeordneten Punkt der Vorrichtung, insbesondere des wenigstens einen Konstruktionselement der Stützeinrichtung, eine definierte Lagezuordnung, die bei jedem Bewegungsvorgang bzw. während des gesamten Bewegungsablaufs unverändert bleibt. Bevorzugt ist das wenigstens eine Referenzierungselement ergonomisch ausgestaltet, um der Person einen hinreichenden Betätigungskomfort zu bieten, wodurch von ihr die Benutzung der Vorrichtung als angenehmer empfunden wird.

Nach einer anderen Ausgestaltung der Erfindung umfasst diese wenigstens ein Körperteil-Arretierungselement zum Befestigen der Vorrichtung, insbesondere wenigstens eines Konstruktionselements der Stützeinrichtung, an dem zumindest einen Körperteil der Person. Das wenigstens eine Körperteil-Arretierungselement dient bevorzugt einer kraftschlüssigen Verbindung der Vorrichtung mit der Person und ist an mit dazu geeigneten Stellen des zumindest einen Körperteils der Person korrespondierenden Stellen des wenigstens einen Konstruktionselements der Stützeinrichtung angeordnet. Auch das wenigstens eine Körperteil-Arretierungselement ist bevorzugt ergonomisch ausgestaltet.

Nach einer anderen Ausführungsform der Erfindung ist der Bewegungsablauf als Abfolge der Teilbewegungen mit einer zugehörigen Datensequenz vorprogrammiert, wobei durch die Datensequenz eine Abfolge von für eine Betätigung eines Werkzeugs zum Durchführen eines Fertigungsvorgangs maßgebenden Steuerungsdaten wenigstens zu einer zeitabhängigen Position des Werkzeugs und/oder einer vom Werkzeug ausgeübten Kraft vorgegeben ist. Während der Ausführung des Bewegungsablaufs zur Betätigung des Werkzeugs während des Durchführens des Fertigungsvorgangs wird eine Abfolge von Messdaten mit der wenigstens einen Sensoreinrichtung erfasst, und aus einem Vergleich zwischen der vorgegebenen Datensequenz und der Abfolge der Messdaten wird eine Information über eine Fertigungsqualität des durch die Betätigung des Werkstücks vorgenommenen Fertigungsvorgangs gewonnen.

Diese Ausführungsform stellt eine bevorzugte Anwendung des erfindungsgemäßen Arbeitstisches zur Verfügung, durch die eine automatische Qualitätsüberwachung eines mit Hilfe der Vorrichtung als Bearbeitungsvorgang an einem Werkstück geführten Bewegungsvorgangs ermöglicht wird. Beispielsweise kann für eine Vorschubkraft bei einem Bohrvorgang ein Kraft-Weg-Zeitverlauf einerseits durch Programmierung als Sollwert für die Ausführung des Bewegungsvorgangs bzw. - ablaufs vorgegeben und andererseits ein solcher Verlauf als Istwert, d.h. Abfolge von Messdaten, aufgenommen werden. Aus einem Soll-Ist-Vergleich kann dann auf die Qualität der hergestellten Bohrung zurückgeschlossen werden, da die Oberflächengüte einer Bohrung von der Kraft und Geschwindigkeit abhängt, mit der der Vorschub des Bohrwerkzeugs vorgenommen wird.

In einer Weiterbildung dieser Ausführungsform wird mit der Vorrichtung eine Qualitätssicherung in Form eines Regelkreises erhalten. Dazu ist insbesondere der als Bearbeitungsvorgang an dem Werkstück vorzunehmende Bewegungsvorgang bzw. -ablauf als Bewegungskorridor programmiert, dessen Einhaltung bei Ausführen des Bewegungsvorgangs bzw. -ablaufs eine optimale Qualität des Bearbeitungsergebnisses sichert. Auf diese Weise kann z.B. eine einfache, schnelle und sichere Herstellung einer einwandfreien Bohrung, einer exakten Verschraubung oder dergleichen gewährleistet werden.

Vorteilhaft ist dabei zu jedem Werkzeug wenigstens ein Bewegungsablauf zur Betätigung des Werkzeugs zum Durchführen je eines Fertigungsvorgangs vorprogrammiert. Zu jedem der Werkzeuge können dabei verschiedene Bewegungsabläufe gespeichert sein. Damit ist nicht nur ein präzises, individuelles Führen jedes einzelnen mit der Vorrichtung verbindbaren Werkzeugs gegeben, sondern es lassen sich auch unterschiedlich ausgestaltete Bewegungsabläufe für unterschiedliche Bearbeitungsvorgänge mit demselben Werkzeug vorsehen und nach Bedarf optimal ausführen.

Nach einer anderen Weiterbildung der Erfindung ist wenigstens ein für eine Betätigung eines Werkzeugs zum Durchführen eines Fertigungsvorgangs maßgebender Positions-Sollwert der Vorrichtung und/oder des Werkzeugs vorgegeben. Während des Durchführens des Bewegungsablaufs der Vorrichtung wird deren aktuelle Position und/oder diejenige des Werkzeugs mit der wenigstens einen Sensoreinrichtung erfasst und mit dem genannten Positions-Sollwert der Vorrichtung und/oder des Werkzeugs verglichen und ein vorprogrammierter Bewegungsablauf zur Betätigung des Werkzeugs zum Durchführen eines Fertigungsvorgangs ausgeführt, sobald sich die genannte aktuelle Position innerhalb eines vorgebbaren räumlichen Bereichs um den genannten Positions-Sollwert befindet.

Gemäß dieser Weiterbildung können wenigstens teilweise automatisierte Fertigungsvorgänge mit dem Werkzeug vorteilhaft in einen von der Vorrichtung geführten Bewegungsablauf eingebunden werden. Die Vorrichtung kann dazu bevorzugt in der Weise programmiert sein, dass der wenigstens eine Positions-Sollwert eine Position im Verlauf eines Bewegungskorridors beschreibt. Im Zuge des Ausführens des bzw. der Bewegungsvorgänge wird das Werkzeug beim Erreichen der genannten Position automatisch betätigt. Beispielsweise ist damit ein selbsttätiges, schnelles und präzises Setzen von Befestigungsmitteln im Verlauf eines Montagevorgangs durchführbar.

Der gemäß der beschriebenen Weiterbildung der Erfindung vorgesehene vorgebbare räumliche Bereich um den genannten Positions-Sollwert, innerhalb dessen sich die genannte aktuelle Position der Vorrichtung und/oder des Werkzeugs zum Auslösen des beschriebenen Fertigungsvorgangs befinden muss, dient als Toleranzbereich für den von der Person ausgeführten Bewegungsvorgang und erleichtert das Abgehen des bzw. der Positions-Sollwerte. Bevorzugt ist das Werkzeug mit einer Halterungseinrichtung an der Stützeinrichtung befestigt, die ein Nachjustieren des Werkzeugs in einem in seiner Ausdehnung dem Toleranzbereich zumindest entsprechenden räumlichen Bereich gestattet. Erreicht die Person den Toleranzbereich um den Positions-Sollwert, wird die Halterungseinrichtung von der Vorrichtung selbsttätig angesteuert, um eine präzise Justierung des Werkzeugs auf den Positions-Sollwert vorzunehmen.

Gemäß einer anderen bevorzugten Weiterbildung der Erfindung ist die wenigstens eine Sensoreinrichtung zum Erfassen von Daten über wenigstens eine Beschaffenheitsangabe des Werkzeugs ausgebildet.

Eine derartige Beschaffenheitsangabe kann durch die Art und Form des Werkzeugs gegeben sein. So kann z.B. von der Sensoreinrichtung detektiert werden, ob es sich bei dem betreffenden Werkzeug um einen Schraubendreher, einen Bohrer oder dergleichen handelt und welche Form und Größe der Schraubendreher bzw. welchen Durchmesser der Bohrer aufweist. Diese Detektion der Beschaffenheitsangabe kann bevorzugt über eine informationstechnische Verbindung des wenigstens einen Werkzeugs in der Schnittstelle zur Vorrichtung erfolgen und stellt einen sehr einfachen Fall einer diesbezüglichen Messdatenerfassung dar. Eine weitere Beschaffenheitsangabe kann durch einen Verschleißzustand des Werkzeugs gebildet sein. Dieser lässt sich vorzugsweise durch Auswerten einer Abbildung des Werkzeugs ermitteln. Zumindest hilfsweise kann dafür aber auch eine Überwachung der aufsummierten Betriebszeiten des Werkzeugs oder einer über die gesamte Betriebszeit des Werkzeugs seit dessen Inbetriebnahme aufsummierten bzw. integrierten Kraft-Weg-Zeit-Funktion ausgewertet werden. Die aufsummierten Betriebszeiten bzw. die integrierte Kraft-Weg-Zeit-Funktion ergeben über einen ggf. empirisch ermittelbaren Zusammenhang mit durch den Einsatz des Werkzeugs hervorgerufenen Abnutzungen eine Information über den aktuellen Verschleißzustand.

Daten über die wenigstens eine Beschaffenheitsangabe des Werkzeugs können mit zu jedem Werkzeug und zu jedem Fertigungsvorgang vorgebbaren und programmierten Sollwerten, die z.B. Art, Größe, Verschleißzustand des Werkzeugs usw. betreffen, verglichen werden. Aus einem Soll-Ist-Vergleich kann bestimmt werden, ob das Werkzeug noch den gestellten Anforderungen insbesondere an die Qualität der damit auszuführenden Fertigungsvorgänge entspricht. Ist ein Werkzeug für einen anstehenden Fertigungsvorgang ungeeignet, zu sehr verschlissen oder dergleichen, wird dies aus dem Soll-Ist-Vergleich erkannt, der Fertigungsvorgang wird blockiert. Dies kann durch das Führen des Bewegungsvorgangs, der für den mit dem betreffenden Werkzeug aktuell vorzunehmenden Fertigungsvorgang auszuführen ist, erfolgen, indem dieser Bewegungsvorgang in der vorgesehenen Form blockiert und vorzugsweise statt dessen ein alternativer Bewegungskorridor freigegeben wird, der für einen entsprechend angepassten Werkzeugwechsel ausgestaltet ist. Wahlweise oder zusätzlich kann die Ausgabe einer Warnmeldung, optisch und/oder akustisch, vorgesehen sein.

### Kurze Beschreibung der Zeichnungen

Ausführungsbeispiele der Erfindung sind in der Zeichnung dargestellt und werden im nachfolgenden näher beschrieben. Es zeigen:
Figur 1 ein Beispiel einer Vorrichtung für einen erfindungsgemäßen Arbeitstisch, deren Zusammenwirken mit einer Person grob schematisch skizziert ist,
Figur 2 eine erste Skizze eines erfindungsgemäßen Arbeitstisches mit einer Vorrichtung gemäß Figur 1 in einer grob schematischen Seitenansicht,
Figur 3 eine zweite Skizze des erfindungsgemäßen Arbeitstisches gemäß Figur 2 in einer grob schematischen Draufsicht,
Figur 4 eine dritte Skizze des erfindungsgemäßen Arbeitstisches gemäß Figur 2 in einer schematischen Perspektivansicht,
Figur 5 ein Beispiel für eine nicht erfindungsgemäße Vorrichtung, deren Zusammenwirken mit einer Person symbolisch skizziert ist, in einer grob schematischen Seitenansicht, und
Figur 6 eine Abwandlung des Beispiels der nicht erfindungsgemäßen Vorrichtung gemäß Figur 5 in einer grob schematischen Seitenansicht.

### Bevorzugte Ausführungsform der Erfindung

Ein bevorzugtes Einsatzgebiet des erfindungsgemäßen Arbeitstisches ist durch die Fertigung, insbesondere die industrielle Fertigung, gegeben. Besonders bevorzugt ist die Vorrichtung dabei anwendbar in der industriellen Montage von Unikaten und kleinsten Produktserien, Serien auch größerer Stückzahlen von Produkten mit hoher Variantenvielfalt sowie von hochkomplexen und miniaturisierten Produkten, die sich dem Einsatz von Industrie- und Fertigungsrobotern trotz stetig verfeinerter Steuerungsmechanismen bisher verschließt und nach wie vor von Handarbeitsplätzen dominiert wird. Die erfindungsgemäße Vorrichtung ist dazu vorgesehen, eine Lücke zwischen frei programmierbaren Automaten und rein manuellen Arbeitsplätzen zu schließen, um so die manuellen Tätigkeiten produktiver gestalten und unterstützen zu können.

Die vorliegende Erfindung unterstützt den Anwender durch ein semiautomatisiertes System bei manuellen Tätigkeiten in der Montage. Ziel der beschriebenen neuen Vorrichtung ist dabei eine Hybridisierung durch eine serielle und/oder parallele Kopplung technischer Kinematiken mit einer Biokinematik des Menschen. Hierzu sollen auch technische Regelungsfunktionen mit visiomotorischen bzw. sensomotorischen Fähigkeiten des Menschen sowie technische Antriebe mit der Muskelkraft des Menschen aufgabenangepasst kombiniert werden, um so die jeweils benötigten spezifischen Vorteile der unterschiedlichen technischen und physiologischen Systeme zu nutzen.

Als ein besonderer Kern der Erfindung ist eine intelligente Kombination und Integration unterschiedlicher Kinematiken eines Menschen, einer Maschine bevorzugt in einer Ausgestaltung als Exoskelett und wenigstens eines Werkzeugs in einer Anwendung anzusehen. Ein derartiges semiautomatisiertes System vereint und nutzt die Vorteile von Mensch und Maschine, indem z.B. eine gute, präzise Sensorik des Menschen wie etwa der Fühlsinn der menschlichen Hand mit einer Überwachung sowie hohen Wiederholgenauigkeit der Maschine kombiniert wird, und qualifiziert den Menschen so für steigende Anforderungen in der Fertigung. Die Kombination der Kinematiken von Mensch und Maschine ist aufgabenspezifisch konfigurierbar.

Derartige hybride Systeme zeigen sich als besonders geeignet für die vorstehend genannten Montageaufgaben, die in vielen Branchen der industriellen Produktion, wie z.B. dem Flugzeugbau und der Medizintechnik, auftreten. Wesentliche Zielfelder, in denen eine deutliche, teilweise sprungartige Verbesserung erreicht werden kann, sind die Genauigkeitserhöhung, Kraftverstärkung, Fehlervermeidung durch Integration prozessbezogener sogenannter Poka-Yoke-Mechanismen sowie die wesentliche ergonomische Unterstützung älterer oder körperlich eingeschränkter Mitarbeiter. Ökonomische Vorteile ergeben sich aus der Unterstützung des Mitarbeiters vor allem durch eine höhere Produktivität z.B. aufgrund von Fehlervermeidung. Die Steigerung der Ergonomie in der Montage sowie eine geringere physische und mentale Belastung des Mitarbeiters sind als primäre soziale Vorteile zu nennen.

Die Montage als letzter Schritt der Wertschöpfungskette unterliegt besonderen Anforderungen. Mitarbeiter in der Fertigung haben ein stetig steigendes Durchschnittsalter. Gleichzeitig schreiten Miniaturisierung und Komplexität vieler Produkte voran. Als Folgen für die Mitarbeiter resultieren ein steigender Leistungsdruck, zunehmende Arbeitszeiten und an Komplexität zunehmende Aufgaben. Zusätzlich werden vom Kunden eine stetig steigende Produktqualität sowie eine diese gewährleistende Qualitätssicherung gefordert, wodurch sich die notwendige Genauigkeit in der Fertigung ständig erhöht. Bereits dieser Auszug an Anforderungen zeigt, dass geeignete Hilfsmittel für die Fertigung zwingend erforderlich sind.

Gegenstand der vorliegenden Erfindung ist eine halbautomatisierte, gemischte Kinematik, die sich aus einer menschlichen Kinematik, die z.B. durch einen Arm mit Hand oder ein Bein gebildet sein kann, und einer führenden und/oder unterstützenden Kinematik eines Roboters, z.B. eines Exoskeletts, zusammensetzt, zu der in einer bevorzugten Ausgestaltung eine Kinematik eines beliebigen Werkzeugs als erweiternde Kinematik, z.B. in Form einer zusätzlichen Drehachse zum Schrauben oder Bohren, hinzutritt. Die führende und/oder unterstützende Kinematik des Roboters, z.B. des Exoskeletts, wird von dem Menschen "angezogen". Hierfür stehen Arretierungselemente als Arretierungsmöglichkeiten sowie Referenzierungselemente als Referenzierungsmerkmale zur Verfügung.

Die Vorrichtung des erfindungsgemäßen Arbeitstisches in ihrer Kopplung mit der sie verwendenden Person integriert somit intelligent die Vorteile bzw. Fähigkeiten der jeweiligen Kinematik und Sensorik der Vorrichtung und der Person, z.B. die feine Sensorik der Hand mit der hohen Genauigkeit der Vorrichtung, sowie zusätzlich eine Funktion der Hilfswerkzeuge.

Die Vorrichtung ist so ausgelegt, dass sie sich auf die Körpereigenschaften der Person anpassen lässt. Dazu ist die Vorrichtung bevorzugt modular aufgebaut. Die Kopplung zwischen menschlicher Kinematik und der Vorrichtung wird durch die Referenzierungselemente und Arretierungselemente erzielt, die bevorzugt ergonomisch geformt und an die Person angepasst sind. Die Werkzeuge können sowohl mit der menschlichen Hand verwendet als auch direkt über standardisierte Schnittstellen mit der Vorrichtung verbunden werden. Diese direkte Verbindung des Werkzeugs mit der Vorrichtung hat den Vorteil, dass die menschliche Hand für andere Aufgaben simultan eingesetzt werden kann.

Die Erfindung ermöglicht vorteilhaft eine Verringerung der körperlichen und mentalen Belastung der Person, eine Steigerung der Ergonomie am Arbeitsplatz, eine Erhöhung der Arbeitsgenauigkeit und eine Verbesserung der Produktqualität. Durch die Erfindung wird in vorteilhafter Weise eine Möglichkeit zur einfachen, präzisen, schnellen und sicheren Montage kleiner bzw. miniaturisierter Bauteile, stellt für eine mit Montagearbeiten befasste Person eine Kraftunterstützung zur Verfügung und dient damit der Steigerung der Ausdauer der Person. Die erfindungsgemäße Vorrichtung ist weiterhin durch zusätzliche Sensoreinrichtungen ergänzbar, mit denen die genannte Montagearbeit überwacht und damit z.B. die Sicherheit vor einer Verwechslung von Bauteilen bei dieser Montagearbeit erhöht werden kann. In verallgemeinerter Form besteht durch derartige Sensoreinrichtungen die Möglichkeit einer umfassenden, automatisierten Prozessdatenerfassung, Prozessdatenauswertung und somit Prozessüberwachung.

Die Erfindung ermöglicht ferner ein beschleunigtes Anlernen von Personen zur Ausführung von Aufgaben und insbesondere von Montagearbeiten und dabei einzuhaltenden Montagereihenfolgen.

Das Führen der Person durch die Vorrichtung ist neben der Kraftunterstützung bevorzugt auch einsetzbar für eine Schwingungsreduzierung zur ruhigeren und dadurch präziseren Montage.

Zusammengefasst liegen die Vorteile und Fähigkeiten, die eine Person, in diesem Fall der Mensch, insbesondere bei Montageaufgaben in eine Kopplung mit der erfindungsgemäßen Vorrichtung einbringt, in einer hohen Flexibilität, einer schnellen Reaktionsfähigkeit und der Fähigkeit, sich flexibel auf unterschiedliche Aufgaben und Situationen einzustellen, ferner in überlegenen sensorischen Fähigkeiten, die insbesondere bei einer Feinpositionierung eines Werkstücks zur Geltung kommen, in einer hohen Verfügbarkeit und Zuverlässigkeit und in der überlegenen Fähigkeiten, komplexe Bauteile zu handhaben. Auch entfällt beim Menschen die Notwendigkeit, für die Montagearbeit bereitzustellende Bauteile aufwändig zu magazinieren. Außerdem kann der Mensch eine permanente Kontrolle, insbesondere eine Qualitätskontrolle, über die von ihm verrichtete Arbeit ausüben.

Dagegen ist eine vom Menschen ausgeübte Prozesskontrolle überwiegend unzuverlässig. Auch bestehen ergonomische Einschränkungen bei einer von einem Menschen ausgeübten Arbeit, da dieser nicht alle beliebigen Bewegungen ausführen und z.B. hochpräzise Positionierungen von Bauteilen nur mit Hilfe von Vorrichtungen ausführen kann.

Die Vorteile eines Roboters liegen dagegen in einer schnellen und präzisen Ausführung einfacher, kraftaufwändiger und sich wiederholender Tätigkeiten. Insbesondere werden monotone Tätigkeiten zuverlässig ausgeführt. Der Roboter ermöglicht eine gute Grobpositionierung von Bauteilen in der Montage und dabei eine große Wiederholgenauigkeit. Eine laufende Prozesskontrolle kann in einen Roboter einfach integriert werden. Der Roboter ermöglicht ein exaktes abfahren definierter Bewegungsbahnen und eignet sich bevorzugt zur Handhabung schwerer und scharfkantiger Bauteile.

Dagegen zeigt sich ein Roboter störanfällig und insbesondere zur Handhabung feiner Bauteile je nach deren Gestaltung und Eigenschaften wenig geeignet. Bei einer derartigen Handhabung machen sich insbesondere Toleranzen in der Bewegung des Roboters bemerkbar. Für den Roboter ist eine definierte Bereitstellung erforderlich, und die Abarbeitung von Aufgaben erfolgt starr und unflexibel.

Vor diesem Hintergrund weist die Kopplung der Vorrichtung mit dem Menschen unterschiedliche Vorteile auf, die insbesondere die für eine Montagearbeit entstehenden Kosten, den Zeitaufwand und die erzielte Fertigungsqualität betreffen. In Bezug auf die Kosten ist zu nennen eine hohe Produkt- und Variantenflexibilität, eine flexible Programmierbarkeit bzw. eine flexible Auswahl zwischen unterschiedlichen Programmen, die z.B. unterschiedliche Montagereihenfolgen und Bauteile betreffen können, sowie eine hohe Kapazitätsdichte. Den Zeitaufwand betreffend sind als Vorteile zu nennen eine einfache Schulung der Person, mit der die Vorrichtung gekoppelt ist, eine hohe Verfügbarkeit und Flexibilität, z.B. Wandlungs- und Änderungsflexibilität. Zu einer hohen Arbeits- bzw. Produkt- oder Fertigungsqualität tragen eine einfache Möglichkeit einer permanenten Qualitätsüberwachung, eine Minimierung der Fehleranfälligkeit, eine hohe Verlässlichkeit und Sicherheit, insbesondere eine hohe Nutzersicherheit der Person, hohe Präzision und Zuverlässigkeit sowie Kontinuität bei. In der Summe wird durch den Einsatz der Vorrichtung eine Steigerung der Qualifikation der Person und damit eine deutliche Produktivitätssteigerung erzielt.

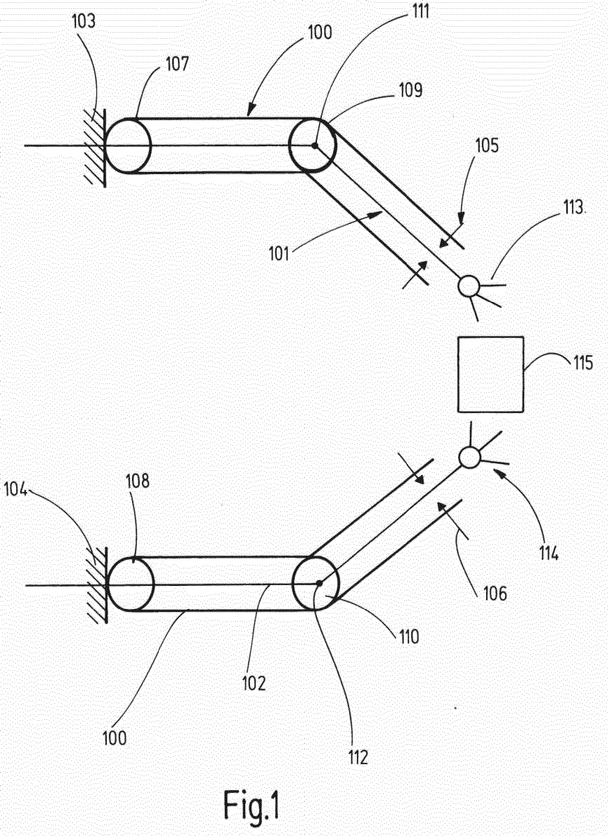

Im nachfolgenden wird anhand der Figuren 1 bis 4 ein Ausführungsbeispiel der Erfindung dargestellt. Das Ausführungsbeispiel betrifft einen für eine Mikromontage verwendeten Arbeitstisch.

Die Mikromontage stellt hohe Anforderungen an die Person insbesondere durch die geforderte hohe Genauigkeit und präzise Handhabung mit kleinen, fragilen Bauteilen. Die Erfindung soll die Person bei der Montage unterstützen.

In Figur 1 ist eine Vorrichtung 100 dargestellt, deren Zusammenwirken mit einer Person grob schematisch skizziert ist. Die Vorrichtung 100 umfasst eine zweiteilige Stützeinrichtung, wobei ein Teil der Stützeinrichtung für einen linken Arm 101 und zweites Teil der Stützeinrichtung für einen rechten Arm 102 der mit der Vorrichtung 100 gekoppelten Person vorgesehen ist; die entsprechenden Teile der Stützeinrichtung sind mit dem zugehörigen Arm 101 bzw. 102 gekoppelt. Über an den Teilen der Stützeinrichtung befestigte Arretierungselemente 103, 104 ist die Vorrichtung 100 nach Figur 1 zum Beispiel an einem Arbeitstisch befestigt, der in Figur 1 nicht dargestellt ist. Die Arme 101, 102 der Person werden von der Vorrichtung 100 gestützt und/oder geführt. Beispielsweise können die betreffenden Teile der Stützeinrichtung von der Person in der Art eines Kleidungsstücks über die Arme 101, 102 gezogen bzw. die Arme in diese Teile der Stützeinrichtung eingeschoben oder eingelegt werden. Referenzierungselemente 105 bzw. 106 sind in der Nähe der Handgelenke der Person an der Vorrichtung 100 angeordnet. Durch die Referenzierungselemente 105, 106 wird zwischen der Vorrichtung 100 und den Armen 101, 102 eine definierte Zuordnung der gegenseitigen Positionen festgelegt.

Die Vorrichtung 100 ist mit in diesem Beispiel vier Gelenkanordnungen 107, 108, 109 bzw. 110 ausgebildet, von denen eine erste und eine zweite Gelenkanordnung 107 bzw. 108 die Teile der Stützeinrichtung für den linken 101 bzw. den 102 Arm der Person mit den Arretierungselementen 103 bzw. 104 verbinden. Die eine dritte bzw. vierte Gelenkanordnung 109 bzw. 110 ist im Bereich des linken bzw. des rechten Ellbogens 111 bzw. 112 der Person angeordnet und ermöglicht eine der Beweglichkeit der Ellbogengelenke angepasste Bewegung der Vorrichtung 100.

Die Vorrichtung 100 nach Figur 1 ist bevorzugt dazu ausgebildet, die linke und die rechte Hand 113 bzw. 114 der Person zu stützen und zu führen, wobei hier der Einfachheit halber ein Ausführungsbeispiel gewählt ist, bei dem das Stützen bzw. Führen lediglich an den Handgelenken der Person erfolgt, nicht dagegen an den Fingern der Hände 113 bzw. 114. Somit wird hier die technisch schwer nachbildbare, hochpräzise und feinfühlige Hand der Person genutzt und durch die Vorrichtung lediglich im Ganzen gestützt bzw. geführt.

In Figur 1 ist mit dem Bezugszeichen 115 als Beispiel ein symbolisch dargestelltes Werkzeug bezeichnet, das von der Person mit den Händen 113 bzw. 114 betätigt wird. Anstelle des Werkzeugs 115 kann auch ein Werkstück treten, oder das Werkzeug 115 kann mit der Vorrichtung 100 unmittelbar verbunden sein. Das Werkzeug 115 kann eine eigene Kinematik aufweisen, z.B. in Form einer Drehachse für einen Schrauber oder eine Bohrmaschine, oder es kann sich um ein einfaches Werkzeug wie einen Schraubendreher, eine Zange, einen Lötkolben oder dergleichen handeln.

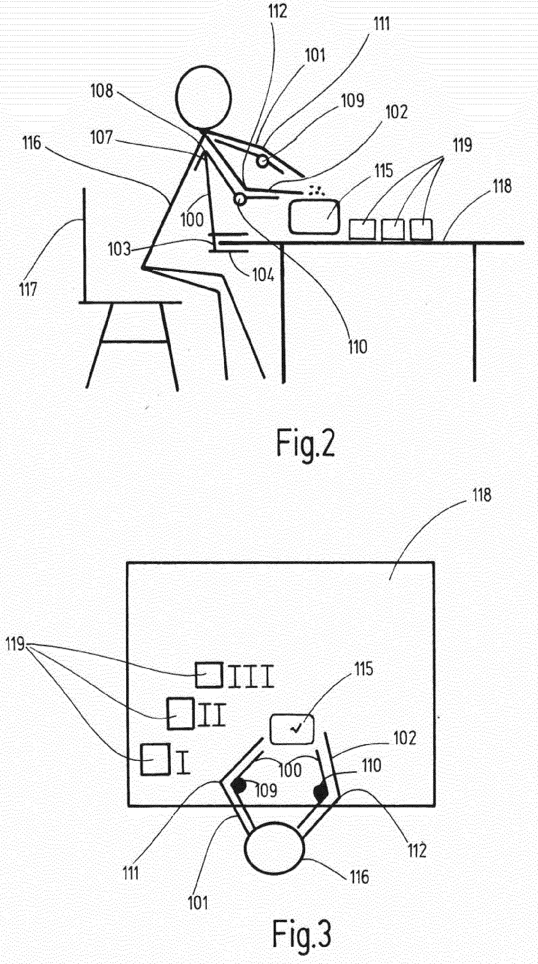

Figur 2, in der wie auch in den folgenden Figuren bereits beschriebene Elemente wieder mit den derselben Bezugszeichen versehen sind, zeigt eine erste Skizze eines erfindungsgemäßen Arbeitstisches mit einer Vorrichtung 100 gemäß Figur 1 in einer grob schematischen Seitenansicht. Darin ist die Person mit dem Bezugszeichen 116 bezeichnet und auf einem Stuhl 117 an einem Arbeitstisch 118 sitzend wiedergegeben. Die Vorrichtung 100 ist über die Arretierungselemente 103, 104 mit dem Arbeitstisch 118 verbunden. Die Arme 101, 102 der auf dem Stuhl 117 sitzenden Person 116 sind mit der Vorrichtung 100 gekoppelt, das heißt sie werden durch die Vorrichtung 100 für eine Betätigung des Werkzeugs 115 oder eine Bearbeitung eines an die Stelle des Werkzeugs 115 tretenden Werkstücks gestützt und geführt. Auf dem Arbeitstisch 118 sind ferner Materialbehältnisse 119 aufgestellt, aus denen zu montierende Bauteile entnehmbar sind. Figur 3 zeigt die Anordnung in einer grob schematischen Draufsicht.

Die in den Figuren 1 bis 3 skizzierte Vorrichtung 100 ist vorteilhaft zum Unterstützen der Arme 101, 102 der Person 116 und damit zur Verbesserung der Ergonomie am Arbeitsplatz ausgebildet. Darüber hinaus erfolgt eine Führung der Arme 101, 102 in einer für die auszuführende Montagearbeit vorgesehenen, definierten Montagesequenz. Dazu werden den Armen 101, 102 der Person 116 nacheinander unterschiedliche Bewegungskorridore vorgegeben, durch die die Person 116 z.B. nacheinander zur Aufnahme eines Werkzeugs 115 und eines bestimmten Bauteils aus einem bestimmten Materialbehältnis 119 und danach mit dem Werkzeug 115 und dem aufgenommenen Bauteil an eine Stelle geführt wird, an der dieses Bauteil mit dem Werkzeug 115 zu montieren ist. Weicht die Person 116 mit ihren Armen 101, 102 von den vorgegebenen Bewegungskorridoren ab, wird durch die Vorrichtung 100 eine vorzugsweise sanfte Gegenkraft auf die Arme 101, 102 ausgeübt und die Arme 101, 102 dadurch in den betreffenden Bewegungskorridor zurückgeführt. Auf diese Weise kann eine Montagereihenfolge vorgegeben und es können Verwechslungen von Bauteilen bei der Montage vermieden werden. Dies ermöglicht eine höhere Präzision bei der Bearbeitung, d.h. Montage, und ermöglicht darüber hinaus ein schnelleres Anlernen der Person für neue Aufgaben. Diese Vorteile und Wirkungen werden dabei in der gezeigten Vorrichtung kombiniert mit dem Feingefühl, welches die Sensorik der menschlichen Hand bietet.

Obgleich in den Figuren 1 bis 3 nicht explizit wiedergegeben, ist die dargestellte Vorrichtung 100 in ihrer Größe der Anatomie der Person 116, z.B. deren Armlänge, anpassbar. Auch können mehrere unterschiedliche Werkzeuge 115 wahlweise benutzt werden.

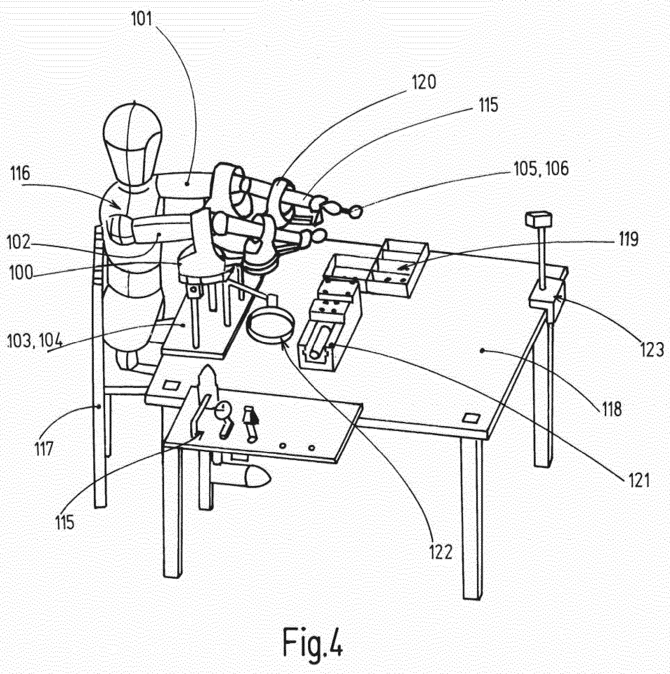

Figur 4 zeigt in einer dritten Skizze eine Abwandlung und weitere Ausgestaltung des erfindungsgemäßen Arbeitstisches mit einer Vorrichtung 100 gemäß Figur 1 in einer schematischen Perspektivansicht. Dabei sind hier mit dem Bezugszeichen 120 versehene Körperteil-Arretierungselemente derart ausgestaltet, dass damit die Arme 101, 102 der Person 116 unmittelbar an der Vorrichtung 100 fixiert sind. In der Darstellung der Figur 4 sind dafür Körperteil-Arretierungselemente 120 für Ober- und Unterarme vorgesehen. Eine Anzahl von Werkzeugen 115 ist auf einem besonderen Werkzeugtablett abgelegt und kann von dort wahlweise von der Person 116 mit den Händen 113 bzw. 114 aufgenommen und dort auch wieder abgelegt werden. Als zusätzliche Einrichtung sind ferner ein Spannstock 121, eine Lupe 122 sowie eine Kamera 123 vorgesehen. Die Kamera 123 ist Teil einer optischen Sensoreinrichtung, mit der z.B. der Ablauf der Montagearbeit für eine Qualitätsüberwachung und -sicherung aufgezeichnet werden kann. Ferner lässt sich über eine Bilderkennung die Beschaffenheit der Werkzeuge 115, z.B. die Werkzeugart oder der Verschleißzustand, detektieren, es kann eine korrekte Beschaffenheit der Bauteile überwacht oder es kann über eine Pupillographie und dadurch beeinflusste Steuerung der Vorrichtung 100 in der eingangs genannten Weise auf die Bewegungen der Person 116 Einfluss ausgeübt werden. Zum Detektieren der Beschaffenheit der Werkzeuge 115 können wahlweise auch weitere, hier nicht dargestellte Sensoreinrichtungen vorgesehen sein.

Der Arbeitstisch in seiner Ausgestaltung gemäß der Figur 4 lässt sich individuell an die Anatomie der Person anpassen, insbesondere durch eine Höhen- und Längenverstellbarkeit. Die Vorrichtung 100 kann außerdem modular aufgebaut sein und lässt sich auf diese Weise flexibel an verschiedene Montageaufgaben anpassen oder erweitern.

Die Werkzeuge 115 können von der Person 116 wahlweise mit den Händen 113, 114 geführt und betätigt werden. Vorzugsweise sind jedoch an der Vorrichtung 100 standardisierte Schnittstellen vorgesehen, an denen verschiedene Werkzeuge 115 wahlweise anschließbar und so durch die Vorrichtung 100 führbar sind.

In dem vorstehend beschriebenen Ausführungsbeispiel eines Arbeitstisches für die Mikromontage ist die Vorrichtung 100 bevorzugt mit schwingungsdämpfenden Aktoren ausgestattet. Diese sind so gesteuert, dass insbesondere zitternde Bewegungen der Person 116, insbesondere der Hände 113 und 114, gedämpft und damit ausgeglichen werden, um zu erreichen, dass die Person 116 die Werkzeuge 115 oder Werkstücke bzw. Bauteile präzise handhaben kann. Die Vorrichtung 100 kann auch mit motorischen Antrieben anderer Bauformen ausgestattet sein, jedoch ist dies in dem vorliegenden Beispiel von untergeordneter Bedeutung, da es hier bevorzugt auf eine Führung einer präzisen Bewegung und allenfalls erst in zweiter Linie auf eine Kraftunterstützung ankommt.

Der dargestellte Arbeitstisch ist zusätzlich durch weitere Funktionen erweiterbar. Beispielsweise ist der Einsatz eines Pedalsystem möglich, um die Funktion der Füße für weitere simultane Tätigkeiten zu nutzen wie z.B. eine Betätigung des Schraubstocks 121.

Die Ausrüstungsmontage im Flugzeugbau bietet eine weitere Anwendung für den erfindungsgemäßen Arbeitstisch und dessen Kopplung mit einer Person, nämlich für die Montage von Kleinkomponenten an einem Arbeitsplatz. Diese Anwendung ist vergleichbar mit der Anwendung in der Mikromontage.

Darüber hinaus wird darauf hingewiesen, dass auch die alleinige, vom erfindungsgemäßen Arbeitstisch entkoppelte Vorrichtung, in nicht erfindungsgemäßer Weise bei der Ausrüstungsmontage im Flugzeugbau Anwendung findet.

So kann ein mit einer solchen Vorrichtung aufgebautes, halbautomatisiertes System die Montage von Bauteilen, bevorzugt in einer Systeminstallation, über dem Kopf der Person unterstützen. Eine derartige, über Kopf auszuführende Arbeit ist nach ergonomischen Gesichtspunkten sehr schwer und unbequem. Hierbei ist die nicht erfindungsgemäße Vorrichtung mit der Person, d.h. einem Monteur, gekoppelt und in zwei beispielhaft im nachfolgenden noch näher beschriebenen Konstellationen einsetzbar.

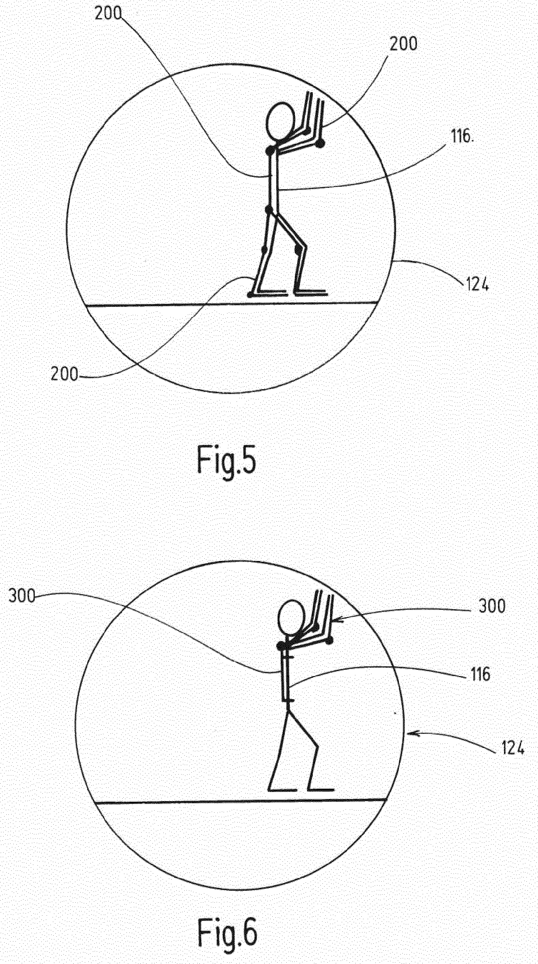

In einer ersten dieser Konstellationen erfolgt eine Kraftübertragung bis hin zum Fußboden, auf dem die Person in einem Flugzeugrumpf 124 steht. Für eine derartige Konstellation ist in Figur 5 als ein zweites Beispiel für eine erfindungsgemäße Vorrichtung, mit dem Bezugszeichen 200 bezeichnet, das Zusammenwirken der Vorrichtung 200 mit einer Person 116 in einer grob schematischen Seitenansicht symbolisch skizziert. Bei diesem Beispiel ist die Vorrichtung 200 sowohl zum Führen als in verstärktem Maße auch zum Stützen der Person 116 ausgestaltet, wozu entsprechend ausgestaltete, motorische Antriebe in der Vorrichtung 200 vorgesehen sind. Damit wird einerseits das Gewicht von Bauteilen, die über Kopf zu montieren sind, sowie das Gewicht dazu benutzter Werkzeuge aufgefangen, andererseits ist auch die Vorrichtung 200 zum Führen der Montagevorgänge und der damit verbundenen Bewegungen eingerichtet. Das Führen erfüllt dabei den Zweck eines zielgerichteten und präzisen Montageablaufs sowie einer Gestaltung der Bewegungen der Person 116 nach ergonomischen sowie der Unfallverhütung dienenden Gesichtspunkten. Somit wird ein sicheres und erleichtertes Arbeiten gewährleistet. Bevorzugt sind auch hier einzusetzende Werkzeuge 115 unmittelbar mit der Vorrichtung 200 verbindbar, wodurch für den Montagevorgang zusätzliche Handhabungsmöglichkeiten geschaffen werden, insbesondere durch ein damit mögliches simultanes Halten des Bauteils und Betätigen des Werkzeugs.

Bei dieser wie auch bei allen sonstigen, allgemein möglichen Einsätzen der Vorrichtung ist eine Unterstützung einer Bewegung, insbesondere durch eine stützende und entlastende Kraft, und eine Führung dieser Bewegung mit einer Entgegenwirkung gegen unerwünschte, aus einem vorgegebenen Bewegungskorridor hinausführende Bewegungen gleichzeitig möglich, d.h. in Überlagerung ausführbar.

In einer zweiten dieser Konstellationen erfolgt eine Kraftunterstützung gemäß einer in Figur 6 wieder in einer grob schematischen Seitenansicht dargestellten Abwandlung der Vorrichtung 200 gemäß Figur 5 lediglich für die Arme der Person 116 bis hin zum Oberkörper. Diese Abwandlung der Vorrichtung ist in Figur 6 mit dem Bezugszeichen 300 bezeichnet.

Eine zweite hier beispielhaft vorgestellte, nicht erfindungsgemäße Anwendung der alleinigen, vom erfindungsgemäßen Arbeitstisch entkoppelten Vorrichtung aus dem Flugzeugbau betrifft die Montage von Fußbodenplatten im Inneren des Flugzeugrumpfes 124. Für diese Anwendung ist eine Variante der Vorrichtung einsetzbar, die den vorstehend beschriebenen im Aufbau ähnlich ist und sich im Wesentlichen nur in der Wahl benutzter Werkzeuge von der zweiten Anwendung unterscheidet.

Dem Stand der Technik gemäß werden die beschriebenen Tätigkeiten in der Mikro- und Ausrüstungsmontage bzw. Systeminstallation manuell durchgeführt. Durch die Vorrichtung, gekoppelt mit einer Person als halbautomatisiertes System, lässt sich der Arbeitsablauf deutlich vereinfachen und die Ergonomie am Arbeitsplatz steigern.

Die Unternehmen der Luftfahrtindustrie setzen in der beschriebenen Montage nach dem Stand der Technik zum großen Teil junges, leistungsfähiges Personal ein. Sobald ein kritisches Alter überschritten ist, ab dem die Fähigkeit für diesen Aufgabenbereich nicht mehr gegeben ist, werden zum Umgehen altersbedingter Probleme an das betreffende Personal neue Aufgabengebiete vergeben.

Eine vollständige Automatisierung der beschriebenen Tätigkeiten unter Einsatz von Industrierobotern als Lösung für dieses Problem scheitert derzeit an den hohen Kosten derartiger Industrieroboter sowie vielfach an deren Gewicht, welches für zulässige flächenbezogene Traglasten vorzugsweise leichter Flugzeugkonstruktionen zu hoch ist. Außerdem dürfen aus arbeitsschutzrechtlichen Gründen Personen und Industrieroboter nicht im selben Arbeitsbereich gleichzeitig eingesetzt werden, so dass deren Arbeiten nacheinander auszuführen wären. Dies steht aber dem Erreichen einer optimalen Montagereihenfolge und kurzen Fertigungsdauer, d.h. Durchlaufzeit durch den gesamten Fertigungsvorgang, entgegen. Weiterhin treten insbesondere im Flugzeugbau Montagearbeiten auf, bei denen Bauteile an schlecht zugänglichen Orten montiert werden müssen. Auch dies steht einem Einsatz von Robotern entgegen. Ferner sind Industrieroboter aufgrund eines hohen Aufwandes, bedingt durch für ihren Einsatz erforderliche Maßnahmen zur Anpassung an und insbesondere Programmierung für von ihnen durchzuführende Arbeiten ungeeignet für Fertigungsaufgaben mit einer hohen Variantenvielfalt zu fertigender Produkte. Schließlich wird mit Robotern nicht die geforderte Fertigungsqualität erzielt.

Die vorstehend beschriebene, nicht erfindungsgemäße Anwendung der Vorrichtung aus dem Flugzeugbau lässt sich für viele andere unterschiedliche Branchen verallgemeinern. So lassen sich z.B. ebenso Anwendungen auf unergonomische und kraftraubende Arbeiten aus dem Bereich der Automobilindustrie, des Schiffbaus und anderer Industriezweige in entsprechender Weise vorsehen.

Im Bereich der Mikromontage ist eine vollständige Automatisierung aufgrund sehr kleiner Bauteile, hoher Qualitätsanforderungen, individueller Anpassungen der Bauteile usw. ebenfalls nicht möglich. Nach dem Stand der Technik werden in diesem Bereich zu fertigende Erzeugnisse unter Einsatz der hochgenauen Sensorik der Hände und mit Hilfswerkzeugen wie Pinzetten und Lupen montiert. Zur passiven Unterstützung werden statische, d.h. passive Fixierhilfen verwendet.

### Bezugszeichenliste

- 100: Vorrichtung (Figuren 1 bis 4)
- 101: linker Arm der Person, mit der 100 gekoppelt ist
- 102: rechter Arm der Person, mit der 100 gekoppelt ist
- 103: 1. Arretierungselement
- 104: 2. Arretierungselement
- 105: 1. Referenzierungselement
- 106: 2. Referenzierungselement
- 107: 1. Gelenkanordnung
- 108: 2. Gelenkanordnung
- 109: 3. Gelenkanordnung
- 110: 4. Gelenkanordnung
- 111: Linker Ellbogen der Person
- 112: Rechter Ellbogen der Person
- 113: linke Hand der Person
- 114: rechte Hand der Person
- 115: Werkzeug
- 116: Person
- 117: Stuhl
- 118: Arbeitstisch
- 119: Materialbehältnis
- 120: Arretierungselemente (Figur 4)
- 121: Spannstock
- 122: Lupe
- 123: Kamera
- 124: Flugzeugrumpf
- 200: Vorrichtung (Figur 5)
- 300: Vorrichtung (Figur 6)

## Patentansprüche

1. Arbeitstisch (118), aufweisend eine Vorrichtung (100) zum Durchführen eines Bewegungsablaufs mit einer Stützeinrichtung, die mit zumindest einem Körperteil (101, 102; 111, 112) einer Person (116) koppelbar ist zum steuerbaren, insbesondere programmierbaren, Stützen und/oder Führen wenigstens einer vom Bewegungsablauf umfassten Teilbewegung des zumindest einen Körperteils (101, 102; 111, 112) der Person (116), wobei die Vorrichtung (100) über Arretierungselemente (103; 104) mit dem Arbeitstisch (118) verbunden ist.

2. Arbeitstisch (118) nach Anspruch 1,
**dadurch gekennzeichnet,**
**dass** die Stützeinrichtung mit wenigstens einer Gelenkanordnung (107, 108, 109, 110) ausgestaltet ist, die zum Anpassen einer Kinematik der Vorrichtung (100) an anatomische Eigenschaften des zumindest einen Körperteils (101, 102; 111, 112) der Person (116) und/oder zum Übertragen des Bewegungsablaufs zwischen der Vorrichtung (100) und dem zumindest einen Körperteil (101, 102; 111, 112) der Person (116) ausgebildet ist.

3. Arbeitstisch (118) nach Anspruch 2,
**dadurch gekennzeichnet,**
**dass** die Stützeinrichtung mit wenigstens einem Bewegungsmittel, insbesondere mit wenigstens einem mit wenigstens einem motorischen Antrieb und/oder mit schwingungsdämpfenden Aktoren ausgebildeten Bewegungsmittel, ausgebildet ist zum Beaufschlagen der Stützeinrichtung an der wenigstens einen Gelenkanordnung (107, 108, 109, 110) mit einer Stellkraft und/oder einer Stellbewegung.

4. Arbeitstisch (118) nach einem oder mehreren der vorhergehenden Ansprüche, **dadurch gekennzeichnet, dass** die Vorrichtung (100) wenigstens eine Sensoreinrichtung zum Erfassen wenigstens eines wenigstens eine Teilbewegung des zumindest einen Körperteils (101, 102; 111, 112) der Person (116) einleitenden und/oder anzeigenden und/oder auslösenden Körpersignals und/oder zum Erfassen wenigstens einer von dem zumindest einen Körperteil (101, 102; 111, 112) der Person (116) ausgeübten Teilbewegung aufweist.

5. Arbeitstisch (118) nach Anspruch 4,
**dadurch gekennzeichnet, dass**
die wenigstens eine Sensoreinrichtung als Bewegungssensor zum Erfassen wenigstens einer von dem zumindest einen Körperteil (101, 102; 111, 112) der Person (116) ausgeführten Teilbewegung und/oder zum Erfassen wenigstens einer von dem zumindest einen Körperteil (101, 102; 111, 112) der Person (116) ausgeübten Kraft und/oder Muskelanspannung und/oder zum Erfassen wenigstens einer von der Person (116) ausgeübten Augenbewegung ausgebildet ist.

6. Arbeitstisch (118) nach einem oder mehreren der Ansprüche 4 bis 5, **dadurch gekennzeichnet, dass** die Vorrichtung (100) eine Steuereinrichtung zum Steuern, insbesondere zum programmierbaren Steuern, der Stützeinrichtung zum Stützen und/oder Führen der wenigstens einen vom Bewegungsablauf umfassten Teilbewegung des zumindest einen Körperteils (101, 102; 111, 112) der Person (116) aufweist, wobei die Steuereinrichtung eingerichtet ist zum Empfangen wenigstens eines Messdaten umfassenden Messsignals von der wenigstens einen Sensoreinrichtung, zum Auswerten des wenigstens einen Messsignals, zum durch wenigstens einen Steuerparameter gesteuerten Ableiten wenigstens eines Steuersignals aus dem wenigstens einen Messsignal und zum Steuern der Stützeinrichtung durch das wenigstens eine Steuersignal.

7. Arbeitstisch (118) nach Anspruch 6,
**dadurch gekennzeichnet,**
**dass** wenigstens eines des wenigstens einen Steuersignals vorgesehen ist zum Einstellen wenigstens eines Sollwertes für das Steuern des Stützens und/oder Führens wenigstens einer der wenigstens einen vom Bewegungsablauf umfassten Teilbewegung des zumindest einen Körperteils (101, 102; 111, 112) der Person (116).

8. Arbeitstisch (118) nach Anspruch 6,
**dadurch gekennzeichnet,**
**dass** die Steuereinrichtung eingerichtet ist zum Erzeugen des wenigstens einen Steuerparameters aus dem wenigstens einen Messsignal.

9. Arbeitstisch (118) nach einem oder mehreren der vorhergehenden Ansprüche,
**dadurch gekennzeichnet,**
**dass** der Bewegungsablauf wenigstens einen Teil einer handwerklichen oder handwerksähnlichen Tätigkeit, insbesondere einer Montagetätigkeit, der Person (116) bildet.

10. Arbeitstisch (118) nach einem oder mehreren der vorhergehenden Ansprüche,
**dadurch gekennzeichnet,**
**dass** die Vorrichtung (100; 200; 300) eingerichtet ist zum Stützen und/oder Führen wenigstens einer vom Bewegungsablauf umfassten Teilbewegung des zumindest einen Körperteils (101, 102; 111, 112) der Person (116), wobei das zumindest eine Körperteil (101, 102; 111, 112) der Person (116) ein Werkzeug (115) hält und/oder führt und/oder wobei die Vorrichtung (100) oder wenigstens ein Konstruktionselement der Stützeinrichtung mit wenigstens einem Werkzeug (115) verbindbar, insbesondere über wenigstens eine Schnittstelle, insbesondere eine zur mechanischen und/oder energetischen und/oder informationstechnischen Verbindung des wenigstens einen Werkzeugs (115) eingerichtete Schnittstelle, verbindbar, ist.

11. Arbeitstisch (118) nach einem oder mehreren der vorhergehenden Ansprüche, **dadurch gekennzeichnet, dass** die Vorrichtung (100) wenigstens ein Referenzierungselement (105, 106) zum Festlegen einer definierten Positionierung zwischen der Vorrichtung (100), insbesondere wenigstens eines Konstruktionselements der Stützeinrichtung, und dem zumindest einen Körperteil (101, 102; 111, 112) der Person (116) aufweist, und/oder durch wenigstens ein Körperteil-Arretierungselement (120) zum Befestigen der Vorrichtung (100), insbesondere wenigstens eines Konstruktionselements der Stützeinrichtung, an dem zumindest einen Körperteil (101, 102; 111, 112) der Person (116).

12. Arbeitstisch (118) nach einem oder mehreren der Ansprüche 4 bis 5 in Verbindung mit Anspruch 10,
**dadurch gekennzeichnet,**
**dass** der Bewegungsablauf als Abfolge der Teilbewegungen mit einer zugehörigen Datensequenz vorprogrammiert ist, wobei durch die Datensequenz eine Abfolge von für eine Betätigung eines Werkzeugs (115) zum Durchführen eines Fertigungsvorgangs maßgebenden Steuerungsdaten wenigstens zu einer zeitabhängigen Position des Werkzeugs (115) und/oder einer vom Werkzeug (115) ausgeübten Kraft vorgegeben ist,
während der Ausführung des Bewegungsablaufs zur Betätigung des Werkzeugs (115) während des Durchführens des Fertigungsvorgangs eine Abfolge von Messdaten mit der wenigstens einen Sensoreinrichtung erfasst wird und
aus einem Vergleich zwischen der vorgegebenen Datensequenz und der Abfolge der Messdaten eine Information über eine Fertigungsqualität des durch die Betätigung des Werkstücks vorgenommenen Fertigungsvorgangs gewonnen wird.

13. Arbeitstisch (118) nach einem oder mehreren der Ansprüche 10 oder 12,
**dadurch gekennzeichnet,**
**dass** zu jedem Werkzeug (115) wenigstens ein Bewegungsablauf zur Betätigung des Werkzeugs (115) zum Durchführen je eines Fertigungsvorgangs vorprogrammiert ist.

14. Arbeitstisch (118) nach einem oder mehreren der Ansprüche 10, 12 oder 13,
**dadurch gekennzeichnet,**
**dass** wenigstens ein für eine Betätigung eines Werkzeugs (115) zum Durchführen eines Fertigungsvorgangs maßgebender Positions-Sollwert der Vorrichtung (100) und/oder des Werkzeugs (115) vorgegeben ist, während des Durchführens des Bewegungsablaufs der Vorrichtung (100) deren aktuelle Position und/oder diejenige des Werkzeugs (115) mit der wenigstens einen Sensoreinrichtung erfasst und mit dem genannten Positions-Sollwert der Vorrichtung (100) und/oder des Werkzeugs (115) verglichen und
ein vorprogrammierter Bewegungsablauf zur Betätigung des Werkzeugs (115) zum Durchführen eines Fertigungsvorgangs ausgeführt wird, sobald sich die genannte aktuelle Position innerhalb eines vorgebbaren räumlichen Bereichs um den genannten Positions-Sollwert befindet.

15. Arbeitstisch (118) nach einem oder mehreren der Ansprüche 10 oder 12 bis 14 in Verbindung mit einem oder mehreren der Ansprüche 4 bis 5,
**dadurch gekennzeichnet,**
**dass** die wenigstens eine Sensoreinrichtung zum Erfassen von Daten über wenigstens eine Beschaffenheitsangabe des Werkzeugs (115) ausgebildet ist.

## Claims

1. Worktable (118), having a device (100) for carrying out a movement sequence with a supporting device which can be coupled to at least one body part (101, 102; 111, 112) of a person (116) for the controllable, in particular programmable, supporting and/or guiding of at least one partial movement, comprised by the movement sequence, of the at least one body part (101, 102; 111, 112) of the person (116), wherein the device (100) is connected to the worktable (118) via locking elements (103; 104).

2. Worktable (118) according to claim 1,
**characterized in that**
the supporting device is designed with at least one joint arrangement (107, 108, 109, 110) which is configured for adapting a kinematic system of the device (100) to anatomical properties of the at least one body part (101, 102; 111, 112) of the person (116) and/or for transmitting the movement sequence between the device (100) and the at least one body part (101, 102; 111, 112) of the person (116).

3. Worktable (118) according to claim 2,
**characterized in that**
the supporting device is configured with at least one movement means, in particular with at least one movement means configured with at least one motor drive and/or with vibration-damping actuators, for applying an actuating force and/or an actuating movement to the supporting device at the at least one joint arrangement (107, 108, 109, 110).

4. Worktable (118) according to one or more of the preceding claims,
**characterised in that**
the device (100) has at least one sensor device for detecting at least one body signal initiating and/or indicating and/or triggering at least one partial movement of the at least one body part (101, 102; 111, 112) of the person (116) and/or for detecting at least one partial movement carried out by the at least one body part (101, 102; 111, 112) of the person (116).

5. Worktable (118) according to claim 4,
**characterised in that**
the at least one sensor device is configured as a movement sensor for detecting at least one partial movement carried out by the at least one body part (101, 102; 111, 112) of the person (116) and/or for detecting at least one force and/or muscle tension exerted by the at least one body part (101, 102; 111, 112) of the person (116) and/or for detecting at least one eye movement carried out by the person (116).

6. Worktable (118) according to one or more of claims 4 to 5,
**characterized in that**
the device (100) has a control device for controlling, in particular for programmable controlling, the supporting device for supporting and/or guiding the at least one partial movement of the at least one body part (101, 102; 111, 112) of the person (116) comprised by the movement sequence; wherein the control device is configured to receive at least one measurement signal comprising measurement data from the at least one sensor device, to evaluate the at least one measurement signal, to derive at least one control signal, controlled by at least one control parameter, from the at least one measurement signal and to control the supporting device by means of the at least one control signal.

7. Worktable (118) according to claim 6,
**characterized in that**
at least one of the at least one control signal is provided for setting at least one setpoint value for controlling the supporting and/or guiding of at least one of the at least one partial movement, comprised by the movement sequence, of the at least one body part (101, 102; 111, 112) of the person (116).

8. Worktable (118) according to claim 6,
**characterized in that**
the control device is configured for generating the at least one control parameter from the at least one measurement signal.

9. Worktable (118) according to one or more of the preceding claims,
**characterized in that**
the movement sequence forms at least a part of a craft or craft-like activity, in particular an assembly activity, of the person (116).

10. Worktable (118), according to one or more of the preceding claims,
**characterized in that**
the device (100; 200; 300) is configured for supporting and/or guiding at least one partial movement, comprised by the movement sequence, of the at least one body part (101, 102; 111, 112) of the person (116), wherein the at least one body part (101, 102; 111, 112) of the person (116) holds and/or operates a tool (115) and/or wherein the device (100) or at least one constructional element of the supporting device is connectable with at least one tool (115), in particular via at least one interface, in particular an interface configured for the mechanical and/or energetic and/or information-technology related connection of the at least one tool (115).

11. Worktable (118) according to one or more of the preceding claims,
**characterised in that**
the device (100) has at least one referencing element (105, 106) for determining a defined positioning between the device (100), in particular at least one constructional element of the supporting device, and the at least one body part (101, 102, 111, 112) of the person (116),
and/or by at least one body part locking element (120) for fastening the device (100), in particular at least one constructional element of the supporting device, to the at least one body part (101, 102; 111, 112) of the person (116).

12. Worktable (118) according to one or more of claims 4 to 5 in connection with claim 10,
**characterized in that**
the movement sequence is pre-programmed as a sequence of the partial movements with an associated data sequence, wherein a sequence of control data, which is decisive for an actuation of a tool (115) for performing a manufacturing process, is predetermined by the data sequence at least for a time-dependent position of the tool (115) and/or a force exerted by the tool (115),
during the carrying out of the movement sequence for actuating the tool (115) during the performing of the manufacturing process, a sequence of measurement data is detected with the at least one sensor device, and information on a manufacturing quality of the manufacturing process performed by actuating the workpiece is obtained from a comparison between the predetermined data sequence and the sequence of measurement data.

13. Worktable (118) according to one or more of claims 10 or 12,
**characterized in that**
at least one movement sequence for actuating the tool (115) for performing a respective manufacturing process is pre-programmed for each tool (115).

14. Worktable (118) according to one or more of claims 10, 12 or 13,
**characterised in that**
at least one position setpoint of the device (100) and/or of the tool (115) is predetermined which is decisive for an actuation of a tool (115) for performing a manufacturing process,
during the carrying out of the movement sequence of the device (100), its current position and/or that of the tool (115) is detected by the at least one sensor device and compared with the said position setpoint of the device (100) and/or of the tool (115), and
a pre-programmed movement sequence for actuating the tool (115) for performing a manufacturing process is executed as soon as the said current position is within a pre-settable spatial range around the said position setpoint.

15. Worktable (118) according to one or more of claims 10 or 12 to 14 in connection with one or more of claims 4 to 5,
**characterised in that**
the at least one sensor device is configured to detect data about at least one characteristic of the tool (115).

## Revendications

1. Table de travail (118), comportant un dispositif (100) pour exécuter une séquence de mouvements avec un système de support, qui peut être couplé avec au moins une partie corporelle (101, 102 ; 111, 112) d'une personne (116) pour le support et/ou la gestion pilotable, en particulier programmable d'au moins un mouvement partiel compris par la séquence de mouvements de l'au moins une partie corporelle (101, 102 ; 111, 112) de la personne (116), sachant que le dispositif (100) est relié à la table de travail (118) par le biais d'éléments de blocage (103 ; 104).

2. Table de travail (118) selon la revendication 1,
**caractérisée en ce que**
le système de support est configuré avec au moins un système articulé (107, 108, 109, 110), qui est constitué pour l'adaptation d'une cinématique du dispositif (100) aux propriétés anatomiques de l'au moins une partie corporelle (101, 102 ; 111, 112) de la personne (116) et/ou pour la transmission de la séquence de mouvements entre le dispositif (100) et l'au moins une partie corporelle (101, 102 ; 111, 112) de la personne (116).

3. Table de travail (118) selon la revendication 2,
**caractérisée en ce que**
le système de support est constitué avec au moins un moyen de mouvement, constitué en particulier avec au moins un système d'entraînement motorisé et/ou des actionneurs amortissant les vibrations pour solliciter le dispositif de support sur au moins un système articulé (107, 108, 109, 110) avec une force de réglage et/ou un mouvement de réglage.

4. Table de travail (118) selon l'une quelconque ou plusieurs des revendications précédentes, **caractérisée en ce que**, le dispositif (100) comporte au moins un dispositif de détection pour la saisie d'au moins un signal corporel introduisant et/ou indiquant et/ou déclenchant au moins un mouvement partiel de l'au moins une partie corporelle (101, 102 ; 111, 112) de la personne (116) et/ou pour la saisie de l'au moins un mouvement partiel exercé par l'au moins une partie corporelle (101, 102 ; 111, 112) de la personne (116).

5. Table de travail (118) selon la revendication 4,
**caractérisé en ce que**
l'au moins un dispositif de détection est constitué en tant que capteur de mouvement pour la saisie d'au moins un mouvement partiel effectué par l'au moins une partie corporelle (101, 102 ; 111, 112) de la personne (116) et/ou pour la saisie d'au moins une force et/ou tension musculaire exercée par l'au moins une partie corporelle (101, 102 ; 111, 112) de la personne (116) et/ou pour la saisie d'au moins un mouvement de l'œil exercé par la personne (116).

6. Table de travail (118) selon l'une quelconque ou plusieurs des revendications 4 à 5,
**caractérisée en ce que**
le dispositif (100) comporte un dispositif de commande pour commander, en particulier pour la commande programmable, du dispositif de support pour le support et/ou la gestion de l'au moins un mouvement partiel compris par la séquence de mouvements de l'au moins une partie corporelle (101, 102 ; 111, 112) de la personne (116),
sachant que le dispositif de commande est agencé pour recevoir au moins un signal de mesure comprenant des données de mesure de l'au moins un dispositif de détection, pour l'évaluation de l'au moins un signal de mesure, pour la dérivation pilotée par au moins un paramètre de commande d'au moins un signal de commande venant de l'au moins un signal de mesure et pour la commande du dispositif de support par l'au moins un signal de commande.

7. Table de travail (118) selon la revendication 6,
**caractérisée en ce qu'**
au moins un de l'au moins un signal de commande est prévu pour régler au moins une valeur théorique pour la commande du support et/ou de la gestion d'au moins un mouvement partiel compris par la séquence de mouvements de l'au moins une partie corporelle (101, 102 ; 111, 112) de la personne (116).

8. Table de travail (118) selon la revendication 6,
**caractérisée en ce que**
le dispositif de commande est agencé pour produire l'au moins un paramètre de commande à partir de l'au moins un signal de commande.

9. Table de travail (118) selon l'une quelconque ou plusieurs des revendications précédentes,
**caractérisée en ce que**
la séquence de mouvements forme au moins une partie d'une activité artisanale ou de type artisanal, en particulier d'une activité de montage, de la personne (116).

10. Table de travail (118) selon l'une quelconque ou plusieurs des revendications précédentes,
**caractérisée en ce que**
le dispositif (100; 200; 300) est agencé pour le support et/ou la gestion d'au moins un mouvement partiel compris de la séquence de mouvements de l'au moins une partie corporelle (101, 102 ; 111, 112) de la personne (116), sachant que l'au moins une partie corporelle (101, 102 ; 111, 112) de la personne (116) tient et/ou gère un outil (115) et/ou sachant que le dispositif (100) ou au moins un élément de construction du dispositif de support peut être relié à au moins un outil (115), en particulier relié par le biais d'au moins une interface, en particulier une interface agencée pour la liaison mécanique et/ou énergétique et/ou télématique de l'au moins un outil (115).

11. Table de travail (118) selon l'une quelconque ou plusieurs des revendications précédentes,
**caractérisée en ce que**
le dispositif (100) comporte au moins un élément de référencement (105, 106) pour établir un positionnement défini entre le dispositif (100), en particulier au moins d'un élément de construction du dispositif de support, et l'au moins une partie corporelle (101, 102 ; 111, 112) de la personne (116),
et/ou par au moins un élément de blocage de la partie corporelle (120) pour la fixation du dispositif (100), en particulier au moins d'un élément de construction du dispositif de support, à au moins une partie corporelle (101, 102 ; 111, 112) de la personne (116).

12. Table de travail (118) selon l'une quelconque ou plusieurs des revendications 4 à 5 en liaison avec la revendication 10,
**caractérisée en ce que**
la séquence de mouvements est préprogrammée en tant que suite des mouvements partiels avec une séquence de données correspondante, sachant que par la séquence de données, est prédéfinie une suite de données de commande essentielles pour un actionnement d'un outil (115) pour l'exécution d'une opération de fabrication au moins pour une position en fonction du temps de l'outil (115) et/ou d'une force exercée par l'outil (115),
une suite de données de mesure est saisie avec l'au moins un dispositif de détection pendant l'exécution de la séquence de mouvements pour l'actionnement de l'outil (115) pendant l'exécution de l'opération de fabrication et
une information relative à une qualité de fabrication de l'opération de fabrication procédée par l'actionnement de l'outil est acquise à partir d'une comparaison entre la séquence de données prédéfinie et la suite des données de mesure.

13. Table de travail (118) selon l'une quelconque ou plusieurs des revendications 10 ou 12,
**caractérisée en ce que**
pour chaque outil (115), au moins une séquence de mouvements pour l'actionnement de l'outil (115) est préprogrammée pour exécuter à chaque fois une opération de fabrication.

14. Table de travail (118) selon l'une quelconque ou plusieurs des revendications 10, 12 ou 13,
**caractérisée en ce qu'**
au moins une valeur théorique de position du dispositif (100) et/ou de l'outil (115) essentielle pour un actionnement d'un outil (115) est prédéfinie pour exécuter une opération de fabrication,
**en ce que** pendant l'exécution de la séquence de mouvements du dispositif (100), la position actuelle de celui-ci et/ou celle de l'outil (115) est saisie avec l'au moins un dispositif de détection et est comparée à la valeur théorique de position citée du dispositif (100) et/ou de l'outil (115) et
une séquence de mouvements préprogrammée pour l'actionnement de l'outil (115) est effectuée pour exécuter une opération de fabrication dès que la position actuelle citée se trouve à l'intérieur d'une zone spatiale prédéfinissable aux environs de la valeur théorique de position citée.

15. Table de travail (118) selon l'une quelconque ou plusieurs des revendications 10 ou 12 à 14 en liaison avec une ou plusieurs des revendications 4 à 5,
**caractérisée en ce que** l'
au moins un dispositif de détection est constitué pour la saisie de données concernant au moins une indication de la nature de l'outil (115).
